(19) Europäisches Patentamt / European Patent Office / Office européen des brevets

(11) **EP 3 039 765 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **14748163.4**

(22) Anmeldetag: **31.07.2014**

(51) Int Cl.:
***H02J 3/38*** *(2006.01)*      ***H02J 7/35*** *(2006.01)*

(86) Internationale Anmeldenummer:
**PCT/EP2014/066530**

(87) Internationale Veröffentlichungsnummer:
**WO 2015/028248 (05.03.2015 Gazette 2015/09)**

(54) **VERFAHREN UND STEUERGERÄT ZUM BETREIBEN EINES ENERGIESPEICHERS FÜR EINE FOTOVOLTAIKANLAGE**

METHOD AND CONTROL DEVICE FOR OPERATING AN ENERGY STORAGE UNIT FOR A PHOTOVOLTAIC SYSTEM

PROCÉDÉ ET COMMANDE DE FONCTIONNEMENT D'UN ACCUMULATEUR D'ÉNERGIE DESTINÉ À UNE INSTALLATION PHOTOVOLTAÏQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2013   DE 102013216908**
**10.04.2014   DE 102014206892**

(43) Veröffentlichungstag der Anmeldung:
**06.07.2016   Patentblatt 2016/27**

(73) Patentinhaber: **Robert Bosch GmbH**
**70442 Stuttgart (DE)**

(72) Erfinder:
• **GRONE, Alexander**
**22417 Hamburg (DE)**
• **SCHMIEGEL, Armin Uwe**
**22609 Hamburg (DE)**
• **LETHMATE, Ralf**
**22301 Hamburg (DE)**
• **MICHLER, Tobias**
**71397 Leutenbach (DE)**
• **KNAUP, Peter**
**64673 Zwingenberg (DE)**

(56) Entgegenhaltungen:
**EP-A1- 2 587 623        US-A1- 2011 276 269
US-A1- 2012 086 804**

**Beschreibung**

Stand der Technik

Die vorliegende Erfindung bezieht sich auf ein Verfahren zum Betreiben eines Energiespeichers für eine Fotovoltaikanlage, auf ein entsprechendes Steuergerät sowie auf ein entsprechendes Computerprogrammprodukt.

Eine Fotovoltaikanlage kann prinzipbedingt nur dann Strom erzeugen, wenn Licht auf die Fotovoltaikzellen der Anlage fällt. Deshalb wird in der Regel nur tagsüber Strom in das öffentliche Netz eingespeist. Weiterhin variiert die momentan eingespeiste Leistung mit der Strahlungsintensität, der Temperatur und dem Einfallswinkel des Lichts auf die Fotovoltaikzellen. Daraus ergibt sich im Tagesgang um die Mittagsstunden eine Leistungsspitze der Fotovoltaikanlage. Diese Leistungsspitze kann unerwünscht sein, da das öffentliche Netz dadurch stark belastet werden kann. Um das Netz zu entlasten, kann eine Einspeisebegrenzung mit dem Betreiber der Fotovoltaikanlage vereinbart werden. Die Leistungsspitze kann durch eine Drosselung der abgegebenen elektrischen Leistung gekappt werden.

Die EP 2 293 410 A2 beschreibt eine Energiesteuerungsvorrichtung für ein Energienetz mit einer Steuereinheit zum Steuern eines Energieflusses zwischen der Energieerzeugungseinheit, der Energiespeichereinheit, der Lasteinheit und/oder dem Energienetz. Die US 2011/276269 A1 offenbart ein System zur Vorhersage von Fotovoltaik Energie.

Offenbarung der Erfindung

Vor diesem Hintergrund wird mit der vorliegenden Erfindung ein Verfahren zum Betreiben eines Energiespeichers für eine Fotovoltaikanlage, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Bei Fotovoltaikanlagen, insbesondere bei kleineren Anlagen, kann die von der Fotovoltaikanlage erzeugte elektrische Energie in einem Pufferspeicher zwischengelagert werden, um dann zur Verfügung zu stehen, wenn die Fotovoltaikanlage keine Energie oder zu wenig Energie bereitstellt. Es kann insbesondere ein über einen momentanen Eigenbedarf hinausgehender Anteil der elektrischen Energie in dem Pufferspeicher zwischengelagert werden. Ein Privathaushalt mit Fotovoltaikanlage und Energiespeicher kann sich dadurch insbesondere im Sommer nahezu seinen gesamten elektrischen Energiebedarf selbst erzeugen.

Um die mittägliche Leistungsspitze der Fotovoltaikanlage zu entschärfen, kann elektrische Energie von der Fotovoltaikanlage während der Mittagstunden in dem Energiespeicher zwischengelagert werden. Um eine Speicherkapazität des Energiespeichers vollständig auszunutzen, ist jedoch mehr Energie nötig, als über die Mittagsstunden zur Verfügung steht. Diese Energie kann vor und alternativ oder ergänzend nach den Mittagsstunden in den Energiespeicher geladen werden. Der Zeitpunkt, ab dem der Energiespeicher an einem aktuellen Tag aufgeladen wird, kann basierend auf Daten aus zumindest einem vorhergehenden Tag gewonnen werden, da der Zeitpunkt ohne Wissen über den aktuell bevorstehenden Tagesverlauf festgelegt werden muss.

Es wird ein Verfahren zum Betreiben eines Energiespeichers für eine Fotovoltaikanlage vorgestellt, die einer Einspeisebegrenzung zur Energieeinspeisung in ein öffentliches Energienetz unterliegt, wobei das Verfahren die folgenden Schritte aufweist:

Einlesen von zumindest einem Kennwert der Fotovoltaikanlage und/oder des Energiespeichers zu zumindest einem, einem aktuellen Betriebstag vorausgehenden Betriebstag der Fotovoltaikanlage;

Ermitteln eines Ladestartzeitpunkts des Energiespeichers für den aktuellen Betriebstag unter Verwendung des Kennwerts des vorausgehenden Betriebstags und einer Verarbeitungsvorschrift; und

Bereitstellen eines Ladesignals für den Energiespeicher zu dem ermittelten Ladestartzeitpunkt des aktuellen Betriebstags, um den Energiespeicher zu betreiben.

Weiterhin wird ein Steuergerät zum Betreiben eines Energiespeichers für eine Fotovoltaikanlage vorgestellt, die einer Einspeisebegrenzung zur Energieeinspeisung in ein öffentliches Energienetz unterliegt, wobei das Steuergerät die folgenden Merkmale aufweist:

eine Einrichtung zum Einlesen von zumindest einem Kennwert der Fotovoltaikanlage und/oder des Energiespeichers zu zumindest einem, einem aktuellen Betriebstag vorausgehenden Betriebstag der Fotovoltaikanlage;

eine Einrichtung zum Ermitteln eines Ladestartzeitpunkts des Energiespeichers für den aktuellen Betriebstag unter Verwendung des Kennwerts des vorausgehenden Betriebstags und einer Verarbeitungsvorschrift; und

eine Einrichtung zum Bereitstellen eines Ladesignals für den Energiespeicher zu dem ermittelten Ladestartzeitpunkt des aktuellen Betriebstags, um den Energiespeicher zu betreiben.

Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Unter einem Energiespeicher kann eine Akkumulatorenanordnung verstanden werden. Ein öffentliches Energienetz kann ein Verteilernetz, insbesondere ein Niederspannungsnetz, beispielsweise im Bereich einer Wohnsiedlung oder Industrieansiedlung sein. Das Energienetz verbindet zumindest eine Netzanschlussstelle der Fotovoltaikanlage mit einem übergeordneten Netz, insbesondere einem Mittelspannungsnetz. Eine Einspeisebegrenzung kann einen Schwellwert, einer von einem Anschlusspunkt maximal in das Energienetz einzuspeisende Energiemenge (insbesondere von elektrischer Energie), repräsentieren, der beispielsweise einen vertraglich festgesetzten Maximalwert für eine in das Energienetz eingespeiste Leistung darstellt. Die Einspeisebegrenzung kann einer Netzstabilisierung dienen. Die Einspeisebegrenzung kann als anteilige Leistung einer maximal theoretisch möglichen Leistung der Fotovoltaikanlage festgelegt sein. Ein Betriebstag kann 24 Stunden aufweisen. Beispielsweise kann der Betriebstag von null Uhr eines Tages bis 24 Uhr des Tages gehen. Ein Kennwert kann einen, auf Betriebsbedingungen der Fotovoltaikanlage und/oder des Energiespeichers basierenden charakteristischen Wert der Fotovoltaikanlage und/oder des Energiespeichers repräsentieren, der an dem zumindest einen vorausgehenden Betriebstag erfasst und hinterlegt worden ist. Ein Ladestartzeitpunkt kann eine Uhrzeit repräsentieren, an der ein Ladevorgang des Energiespeichers initiiert oder modifiziert wird. Eine Verarbeitungsvorschrift kann in einer Lookup-Tabelle abgebildet sein. Ein Ladesignal kann dazu ausgebildet sein, einen Energiefluss von der Fotovoltaikanlage in den Energiespeicher auszulösen. Mit anderen Worten kann das Ladesignal einen Ladevorgang des Energiespeichers auslösen.

Als Kennwert kann ein Überschreitungszeitpunkt, ein Unterschreitungszeitpunkt und/oder ein Ladeendzeitpunkt eingelesen werden. Der Überschreitungszeitpunkt repräsentiert ein erstmaliges Erreichen der Einspeisebegrenzung durch eine in ein Verteilnetz abgegebene Leistung der Fotovoltaikanlage an dem zumindest einen vorausgehenden Betriebstag. Der Unterschreitungszeitpunkt repräsentiert ein letztmaliges Unterschreiten der Einspeisebegrenzung durch die ins Verteilnetz abgegebene Leistung an dem zumindest einen vorausgehenden Betriebstag. Der Ladeendzeitpunkt repräsentiert ein Erreichen einer Speicherkapazität des Energiespeichers an dem zumindest einen vorausgehenden Betriebstag. Der Überschreitungszeitpunkt, der Unterschreitungszeitpunkt und/oder der Ladeendzeitpunkt kann einfach und präzise an dem zumindest einen vorhergehenden Betriebstag erfasst werden. Dadurch kann die Fotovoltaikanlage mit geringem Aufwand betrieben werden.

Der Überschreitungszeitpunkt, der Unterschreitungszeitpunkt und/oder der Ladeendzeitpunkt kann über zumindest zwei Betriebstage gemittelt eingelesen werden. Durch ein Mitteln können Schwankungen von Tag zu Tag abgemildert werden, während ein Trend auch über gemittelte Werte erkennbar bleibt.

Das Verfahren kann einen Schritt des Erfassens von zumindest einem Kennwert des aktuellen Betriebstags aufweisen. Im Schritt des Einlesens kann ferner eine aktuell abgegebene Leistung der Fotovoltaikanlage und/oder ein aktueller Zustand des Energiespeichers eingelesen werden. Im Schritt des Erfassens kann als Kennwert des aktuellen Betriebstags ein erstmaliges Erreichen der Einspeisebegrenzung durch die abgegebene Leistung der Fotovoltaikanlage an dem aktuellen Betriebstag als Überschreitungszeitpunkt und/oder ein letztmaliges Unterschreiten der Einspeisebegrenzung durch die abgegebene Leistung an dem aktuellen Betriebstag als Unterschreitungszeitpunkt und/oder ein Erreichen der Speicherkapazität des Energiespeichers an dem aktuellen Betriebstag als Ladeendzeitpunkt erfasst werden. Durch ein Erfassen kann der Kennwert in einer definierten Art und Weise bestimmt werden. Dadurch können Messunsicherheiten aufgrund einer unklaren Datenherkunft ausgeschlossen werden.

Als Kennwert kann ferner eine aktuell abgegebene Leistung der Fotovoltaikanlage eingelesen werden. Im Schritt des Ermittelns kann ein Teilladestartzeitpunkt ermittelt werden, an dem die aktuell ins Verteilnetz abgegebene Leistung die Einspeisebegrenzung erreicht. Im Schritt des Bereitstellens kann ein Teilladesignal für den Energiespeicher zu dem ermittelten Teilladestartzeitpunkt bereitgestellt werden, um die, die Einspeisebegrenzung übersteigende Leistung der Fotovoltaikanlage in dem Energiespeicher zu speichern. Durch ein Speichern der überschüssigen Energie und ein gleichzeitiges Einspeisen der Energie bis zur Einspeisebegrenzung kann eine Energieverschwendung vollkommen vermieden werden, auch wenn die Fotovoltaikanlage abzüglich der lokalen Verbraucher mehr Leistung bereitstellt, als eingespeist werden darf.

Der Ladestartzeitpunkt kann so ermittelt werden, dass der Ladeendzeitpunkt des vorausgehenden Betriebstags einen vorbestimmten Zeitversatz zu dem Unterschreitungszeitpunkt des vorausgehenden Betriebstags aufweist. Durch ein Festsetzen des Zeitversatzes kann sichergestellt werden, dass der Energiespeicher vollständig genutzt werden kann.

Im Schritt des Einlesens können ferner ein Einspeisezeitpunkt und ein Ladezustand des Energiespeichers eingelesen werden. Im Schritt des Bereitstellens kann zu dem Einspeisezeitpunkt ein Einspeisesignal für den Energiespeicher bereitgestellt werden, um Energie in das öffentliche Energienetz einzuspeisen, wenn der Energiespeicher noch eine einspeisbare Ladung aufweist. Durch das Einspeisen von Restenergie in das Energienetz, beispielsweise nachts, kann die geerntete Energie vollständig ausgenutzt werden.

Der Ladestartzeitpunkt kann so festgelegt werden, dass er vor dem Überschreitungszeitpunkt liegt. Damit kann verhindert werden, dass beim Überschreiten der Einspeisebegrenzung Energie verloren geht.

Das Verfahren kann einen Schritt des Reservierens aufweisen, in dem eine Reservekapazität des Energiespeichers für eine vorbestimmte Zeitdauer reserviert wird. Die Reservekapazität und/oder die Zeitdauer kann unter Verwendung des zumindest einen Kennwerts und einer weiteren Verarbeitungsvorschrift ermittelt werden. Durch ein Vorhalten einer Reservekapazität kann Spitzenleistung in der Batterie eingespeichert werden, wenn sie anfällt. Durch das Reservieren wird zu einem früheren Zeitpunkt mehr Energie ins Netz eingespeist, anstatt in der Batterie gespeichert. Mit anderen Worten wird ein vollständiges Laden des Energiespeichers verzögert.

Die volle Speicherkapazität des Energiespeichers kann freigegeben werden, wenn die Zeitdauer abgelaufen ist. Daraufhin kann der Energiespeicher mit der verbleibenden Sonnenenergie vollgeladen werden, um einen möglichst hohen Eigenverbrauch der produzierten Energie zu ermöglichen.

Mit anderen Worten kann die Batterie zu Beginn der Sonneneinstrahlung bis auf einen Mindestladezustand geladen werden, um sicher Energie für die Abendstunden vorrätig zu haben. Dann kann die produzierte Energie vorrangig ins Netz eingespeist werden und in den Nachmittagsstunden kann die Batterie möglichst bis zur Kapazität gefüllt werden. Wenn die Batterie an einem vorhergehenden Tag beispielsweise aufgrund vorherrschender Wetterverhältnisse oder einer aktuellen Tageslänge nicht vollständig geladen werden konnte, kann das vollständige Laden der Batterie früher am Tag begonnen werden, um die Batterie optimiert zu nutzen.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:

Fig. 1    eine Darstellung einer Fotovoltaikanlage mit einem Steuergerät zum Betreiben eines Energiespeichers der Fotovoltaikanlage gemäß einem Ausführungsbeispiel der vorliegenden Erfindung;

Fig. 2    eine Darstellung eines Tagesgangs einer durch eine Fotovoltaikanlage eingespeisten elektrischen Leistung abzüglich des Eigenverbrauchs;

Fig. 3    eine Darstellung eines weiteren Tagesgangs einer durch eine Fotovoltaikanlage eingespeisten elektrischen Leistung an einem Tag mit geringer Einstrahlung;

Fig. 4    eine Darstellung einer zu früh begonnenen Speicherung von elektrischer Leistung einer Fotovoltaikanlage;

Fig. 5    eine Darstellung einer zu spät begonnenen Speicherung von elektrischer Leistung einer Fotovoltaikanlage;

Fig. 6    eine Darstellung eines Ladevorgangs eines Energiespeichers für eine Fotovoltaikanlage gemäß einem Ausführungsbeispiel der vorliegenden Erfindung;

Fig. 7    eine Darstellung eines Ladevorgangs bei einer zu geringen Speicherkapazität des Energiespeichers;

Fig. 8    eine Darstellung eines zu früh begonnenen Ladevorgangs eines Energiespeichers für eine Fotovoltaikanlage;

Fig. 9    eine Darstellung eines Ladevorgangs eines Energiespeichers für eine Fotovoltaikanlage gemäß einem weiteren Ausführungsbeispiel der vorliegenden Erfindung;

Fig. 10    eine Darstellung eines zu spät begonnenen Ladevorgangs eines Energiespeichers für eine Fotovoltaikanlage;

Fig. 11    ein Ablaufdiagramm eines Verfahrens zum Betreiben eines Energiespeichers für eine Fotovoltaikanlage gemäß einem Ausführungsbeispiel der vorliegenden Erfindung;

Fig. 12    ein Blockschaltbild eines Steuergeräts zum Betreiben eines Energiespeichers für eine Fotovoltaikanlage gemäß einem Ausführungsbeispiel der vorliegenden Erfindung;

Fig. 13    eine Darstellung eines Haushalts beim Speichern von Energie gemäß einem Ausführungsbeispiel der vorliegenden Erfindung;

Fig. 14    eine Darstellung eines Haushalts beim Einspeisen von Energie gemäß einem Ausführungsbeispiel der vorliegenden Erfindung;

Fig. 15    eine Darstellung eines Haushalts beim Verbrauchen von gespeicherter Energie gemäß einem Ausführungsbeispiel der vorliegenden Erfindung;

Fig. 16    eine Darstellung eines Haushalts beim Beziehen von Energie aus einem Stromnetz gemäß einem Ausführungsbeispiel der vorliegenden Erfindung;

Fig. 17    eine Darstellung eines Gleichstromspeichers gemäß einem Ausführungsbeispiel der vorliegenden Erfindung;

Fig. 18    eine Darstellung eines Wechselstromspeichers gemäß einem Ausführungsbeispiel der vorliegenden Erfindung;

Fig. 19    eine Darstellung eines gesteuerten Gleichstromspeichers gemäß einem Ausführungsbeispiel der vorliegenden Erfindung;

Fig. 20    eine Darstellung von Leistungsflüssen an einem Fotovoltaiksystem gemäß einem Ausführungsbeispiel der vorliegenden Erfindung;

Fig. 21    eine Darstellung von Leistungsflüssen an einem Fotovoltaiksystem mit Abregelung;

Fig. 22    eine Darstellung von Leistungsflüssen an einem Fotovoltaiksystem ohne Abregelung gemäß einem Ausführungsbeispiel der vorliegenden Erfindung; und

Fig. 23    eine Darstellung von Leistungsflüssen an einem kapazitätsgeführten Fotovoltaiksystem gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

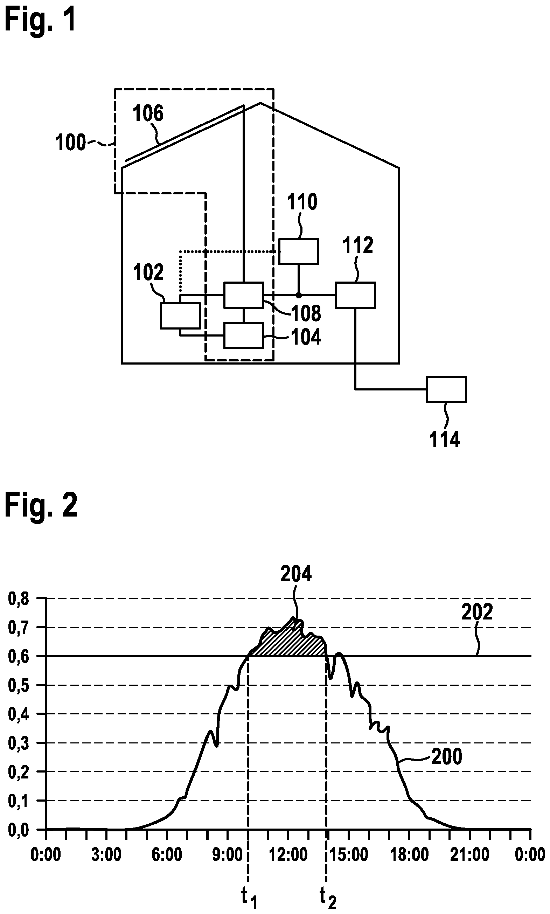

Fig. 1 zeigt eine Darstellung einer Fotovoltaikanlage 100 mit einem Steuergerät 102 zum Betreiben eines Energiespeichers 104 der Fotovoltaikanlage 100 gemäß einem Ausführungsbeispiel der vorliegenden Erfindung. Die Fotovoltaikanlage 100 weist ferner Fotovoltaikmodule 106 und einen Wechselrichter 108 auf. Die Fotovoltaikmodule 106 sind hier auf einem Haus installiert und mit dem Wechselrichter 108 verbunden. Der Wechselrichter 108 ist mit dem Energiespeicher 104 und einem Hausnetz 110 des Hauses verbunden. Das Hausnetz 110 ist über einen Energiezähler 112 mit einem übergeordneten Energienetz 114 verbunden. Das übergeordnete Energienetz 114 ist ein Niederspannungsnetz mit beispielsweise 230 Volt, drei Mal 400 Volt bzw. 115 Volt Wechselspannung. In dem Hausnetz 110 befinden sich schaltbare Verbraucher, die über das Hausnetz 110 mit elektrischer Energie versorgt werden. Über den Energiezähler 112 ist die Fotovoltaikanlage 100 ebenfalls mit dem Energienetz 114 verbunden. Das Steuergerät 102 ist zumindest mit dem Wechselrichter 108 und dem Energiespeicher 104 verbunden. Das Steuergerät 102 kann ebenfalls direkt mit dem Hausnetz 110 verbunden sein.

Speicher 104 in PV-Systemen 100 können zur Eigenbedarfsoptimierung eingesetzt werden. Darüber existieren Fördermechanismen für Speichersysteme 104, die bedingen, dass die Spitze der eingespeisten PV-Leistung (meist mittags) auf eine bestimmte Grenze beschränkt wird, um Verteilnetze 114 zu entlasten.

Es wird vorgeschlagen, eine Steuerung 102 im Speichersystem 104 zu integrieren, die es erlaubt in Abhängigkeit externer Vorgaben den Betriebsmodus des PV-Speicher-Systems 100 zwischen Eigenbedarfsoptimierung und Kappung der Leistungsspitze zum Netz 114 umzuschalten. Wobei die letztere Betriebsweise bedeutet, dass der Speicher 104 erst dann gefüllt wird, wenn die Einspeisebegrenzung erreicht ist.

Fig. 2 zeigt eine Darstellung eines Tagesgangs 200 einer durch eine Fotovoltaikanlage erzeugten elektrischen Leistung. Der Tagesgang 200 zeigt den Verlauf der ins Verteilnetz eingespeisten elektrischen Leistung an einem sonnigen Betriebstag der Fotovoltaikanlage. Der Tagesgang 200 ist in einem Diagramm aufgetragen. Das Diagramm hat auf der Abszisse die Tageszeit von Mitternacht bis Mitternacht aufgetragen. Auf der Ordinate ist die elektrische Leistung als Anteil einer installierten, nominellen elektrischen Leistung der Fotovoltaikanlage aufgetragen. Die Fotovoltaikanlage unterliegt einer Einspeisebegrenzung 202 in ein öffentliches Energienetz. Das bedeutet, dass von der Fotovoltaikanlage erzeugte elektrische Energie nur bis zu einem festgesetzten Anteil der installierten Leistung in das Energienetz abgegeben werden darf. Die Einspeisebegrenzung 202 ist in dem hier gezeigten Beispiel bei 60 Prozent der installierten Leistung festgelegt. Die Einspeisebegrenzung 202 ist als Linie parallel zur Abszisse in dem Diagramm eingetragen. Der Tagesgang 200 beginnt mit der Dämmerung, wenn das erste Tageslicht auf die Solarzellen der Fotovoltaikanlage trifft. Wenn die Solarzellen durch direktes Sonnenlicht bestrahlt werden, steigt die abgegebene elektrische Leistung stark an. Je senkrechter die Sonne zu den Solarzellen steht, umso mehr Sonnenlicht kann absorbiert werden und umso mehr elektrische Energie wird erzeugt. Während des Tagesverlaufs treten immer wieder geringfügige Verringerungen der Strahlungsintensität, beispielsweise durch Wolken, auf. Dadurch weist der Tagesgang 200 immer wieder vorübergehende Einbrüche auf. In den Mittagsstunden erreicht der Tagesgang 200 seinen höchsten Wert. Hier werden maximal knapp über 70 Prozent der installierten elektrischen Leistung erreicht. Am Nachmittag sinkt die Stromproduktion wieder ab, um mit der Abenddämmerung zum Erliegen zu kommen. Die ins Netz eingespeiste Leistung wird darüber hinaus durch die im Hausnetz verbrauchte Leistung beeinflusst. Eine Fläche unterhalb des Tagesgangs 200 repräsentiert eine an diesem Tag von der Fotovoltaikanlage ins Verteilnetz eingespeiste Energiemenge. Die erreichten gut 70 Prozent sind mehr, als die Einspeisebegrenzung 202 zulässt, die Fotovoltaikanlage weist also einen Leistungsüberschuss 204 auf. Bereits kurz nach 10 Uhr überschreitet der Tagesgang 200 die Einspeisebegrenzung 202. Bis ca. 14:30 Uhr besteht der Leistungsüberschuss 204, der nicht in das öffentliche Netz eingespeist werden darf. Die Fläche 204 unterhalb des Tagesgangs 200 und oberhalb der Einspeisebegrenzung 202 repräsentiert eine Energiemenge, die entweder vernichtet werden muss, gepuffert werden kann oder durch eine Reduktion eines Wirkungsgrads der Fotovoltaikanlage erst gar nicht produziert wird. In dem hier dargestellten beispielhaften Tagesverlauf ist unmittelbar vor dem Unterschreiten der Einspeisebegrenzung 202 ein starker Einbruch des Tagesgangs 200 gezeigt. Ohne den Einbruch würde die Fotovoltaikanlage noch bis 15 Uhr den Leistungsüberschuss 204 erzeugen. Der Zeitpunkt, an dem der Tagesgang 200 die Einspeisebegrenzung zum ersten Mal überschreitet, wird hier als Überschreitungszeitpunkt $t_1$ bezeichnet. Der Zeitpunkt, an dem der Tagesverlauf 200 die Einspeisebegrenzung 202 zum letzten Mal unterschreitet, wird hier als Unterschreitungszeitpunkt $t_2$ bezeichnet. Zwischen dem Überschreitungszeitpunkt $t_1$ und dem Unterschreitungszeitpunkt $t_2$ weist die Fotovoltaikanlage den Leistungsüberschuss 204 auf.

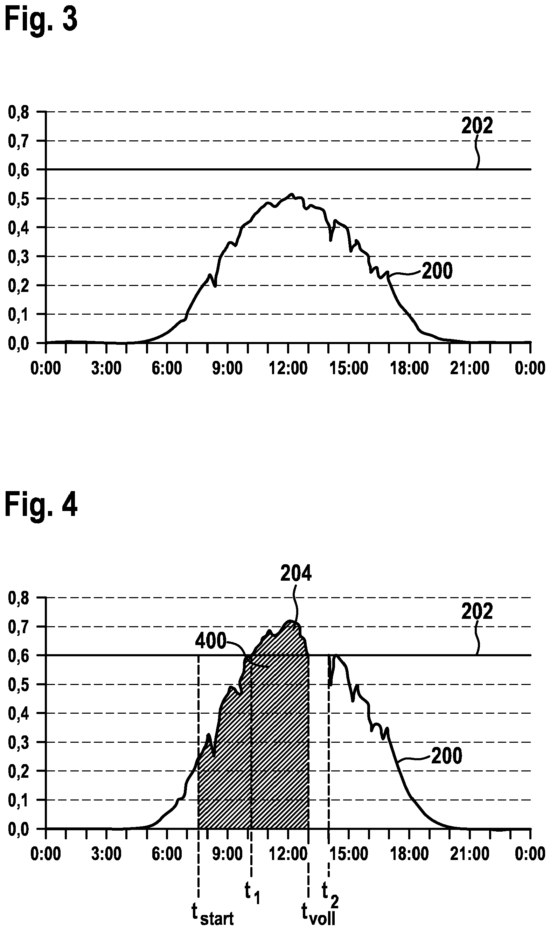

Fig. 3 zeigt eine Darstellung eines weiteren Tagesgangs 200 einer durch eine Fotovoltaikanlage ins Netz eingespeisten elektrischen Leistung an einem Tag mit geringer solarer Einstrahlung. Wie in Fig. 2 beginnt der Tagesverlauf 200 mit der Morgendämmerung, erreicht in den Mittagsstunden seinen höchsten Wert und endet mit der Abenddämmerung. Hier ist die Sonneneinstrahlung jedoch so gering oder der Eigenverbrauch so hoch, dass die Fotovoltaikanlage nur maximal die Hälfte ihrer nominellen Leistung ins Netz einspeist. Damit überschreitet der Tagesverlauf 200 die Einspeisebegrenzung 202 nicht. Der, nicht im Haus verbrauchte, von der Fotovoltaikanlage erzeugte Strom kann in das Netz eingespeist werden.

Im einfachsten Fall kann ein Umschalten der Betriebsweisen an einem bestimmten Datum durch den Kunden erfolgen. Ein Zeitraum für den eigenbedarfsoptimierten Betrieb kann bei schwacher Einstrahlung, also tendenziell im Winter vorgegeben werden. Ein Zeitraum zur Optimierung der Energieausbeute bei Einspeisebegrenzung kann bei starker Einstrahlung, also tendenziell im Sommer vorgegeben werden.

Da diese feste Vorgabe von Zeiträumen verschiedener Betriebsweisen jahreszeitliche Änderungen des Wetters wenig berücksichtigt, bietet es sich an adaptive Lösungen zu verfolgen.

Dazu wird vorgeschlagen die Umschaltung der Betriebsweise von Winter auf Sommer dann vorzunehmen, wenn die Einspeisegrenze 202 erreicht wird und der Speicher zum Zeitpunkt $t_2$ voll ist. Die Umschaltung von Betriebsweise Sommer auf Winter kann erfolgen, wenn die Einspeisegrenze 202 durch die Einspeiseleistung 200 nicht mehr erreicht wird.

Eine Verbesserung der Ausnutzung des Speichers kann gegenüber der vorgeschlagenen jahreszeitlichen Umschaltung durch ein Blockieren des Speicherns zu Beginn des Tagesverlaufs 200 erreicht werden. Dabei kann die Speichernutzung über den Tag angepasst werden.

Fig. 4 zeigt eine Darstellung einer zu früh begonnenen Speicherung von elektrischer Leistung 400 einer Fotovoltaikanlage. Die zu früh freigegebene Speicherung ist anhand eines Tagesgangs 200, wie in Fig. 2 dargestellt. Wie in Fig. 2 weist die Fotovoltaikanlage in den Mittagsstunden einen Leistungsüberschuss 204 auf. Wie bereits in Fig. 2 als Möglichkeit zur Nutzung des Leistungsüberschusses 204 angedeutet, wird hier die von der Fotovoltaikanlage bereitgestellte elektrische Energie in einem Energiespeicher gespeichert. Die gespeicherte Energie 400 kann somit dann zu Verfügung gestellt werden, wenn die Fotovoltaikanlage weniger Energie bereitstellt oder bereitstellen kann, als benötigt wird. Dabei kann die gespeicherte Energie 400 in das Energienetz eingespeist werden oder zum Eigenverbrauch verwendet werden. Der Energiespeicher wird ab einem Ladestartzeitpunkt $t_{start}$ mit der vollständigen, momentan von der Fotovoltaikanlage bereitgestellten Leistung geladen. Die gespeicherte Energie 400 wird also nicht in das Netz eingespeist. Der Ladestartzeitpunkt $t_{start}$ liegt vor dem Überschreitungszeitpunkt $t_1$.

In dem gezeigten Beispiel ist der Ladestartzeitpunkt $t_{start}$ zu früh gewählt. Der Energiespeicher ist zu einem Ladeendzeitpunkt $t_{voll}$ an seiner Kapazitätsgrenze angelangt und damit voll. Der Ladeendzeitpunkt $t_{voll}$ liegt jedoch vor dem Unterschreitungszeitpunkt $t_2$. Damit muss ein verbleibender Leistungsüberschuss 204 ungenutzt bleiben, da die Einspeisebegrenzung 202 die erlaubte maximale Leistung definiert. Durch den zu früh gewählten Ladestartzeitpunkt $t_{start}$ wird also am Ende des Leistungsüberschusses 204 zwischen $t_{voll}$ und $t_2$ Energie verschenkt.

Arbeitet das PV-Speichersystem so, dass der Eigenverbrauch optimiert wird, so kann es passieren, dass an sonnigen Tagen der Speicher bereits geladen ist, bevor das System die Einspeisebegrenzung 202 erreicht.

Als Folge davon kann die überschüssige Energie nicht mehr in dem Speicher zwischengespeichert werden. Zur Begrenzung der Einspeiseleistung kann dann die PV-Anlage außerhalb des MPP betrieben werden. Somit wird solar vorhandene Energie verschenkt, die nicht in elektrische Energie umgewandelt wird.

In Fig. 4 ist das Verhalten gezeigt, wenn der Speicher zu früh freigegeben wird. Zum Zeitpunkt $t_{start}$ beginnt die Nutzung des Speichers zur Optimierung des Eigenverbrauchs. Die Speicherkapazität reicht jedoch nicht aus, um die volle bis zum Zeitpunkt $t_2$ anfallende Energie 200 aufzunehmen. Dadurch muss die Anlage im Zeitraum von $t_{voll}$ bis $t_2$ außerhalb des MPP gefahren werden. Es wird somit Energie verschwendet.

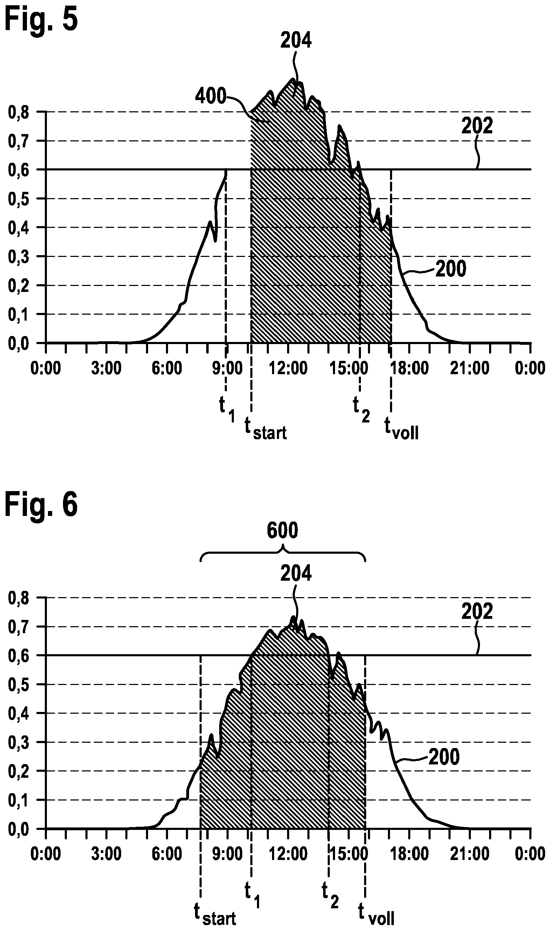

Fig. 5 zeigt eine Darstellung einer zu spät begonnenen Speicherung von elektrischer Leistung 400 einer Fotovoltaikanlage. Die zu spät freigegebene Speicherung ist anhand eines Tagesgangs 200, wie in Fig. 2 dargestellt. Wie in Fig. 2 weist die Fotovoltaikanlage in den Mittagsstunden einen Leistungsüberschuss 204 auf. Wie in Fig. 4 wird hier nicht der gesamte Leistungsüberschuss 204 in den Energiespeicher geladen. Im Gegensatz zu Fig. 4 liegt der Ladestartzeitpunkt $t_{start}$ nach dem Überschreitungszeitpunkt $t_1$. Zwischen dem Überschreitungszeitpunkt $t_1$ und dem Ladestartzeitpunkt $t_{start}$ muss die Leistung der Fotovoltaikanlage also begrenzt werden. Wie in Fig. 4 wird der Energiespeicher ab dem Ladestartzeitpunkt $t_{start}$ mit der vollen Leistung der Fotovoltaikanlage geladen. Der Ladeendzeitpunkt $t_{voll}$ liegt nach dem Unterschreitungszeitpunkt $t_2$.

In Fig. 5 ist ein zu spätes Freigeben des Speichers gezeigt. Hier wird zwischen dem Zeitpunkt $t_1$ bis zur Nutzung des Speichers ab dem Zeitpunkt $t_{start}$ die Anlage außerhalb des MPP betrieben. Dies wäre nicht nötig, da nach Verlassen der Einspeisebegrenzung 202 zum Zeitpunkt $t_2$ noch Speicherkapazität vorhanden ist, die bis zum Zeitpunkt $t_{voll}$ genutzt wird.

Fig. 6 zeigt eine Darstellung eines Ladevorgangs 600 eines Energiespeichers für eine Fotovoltaikanlage gemäß einem Ausführungsbeispiel der vorliegenden Erfindung. Der Ladevorgang 600 ist anhand eines Tagesgangs 200, wie in Fig. 2 gezeigt. Wie in Fig. 2 weist die Fotovoltaikanlage in den Mittagsstunden einen Leistungsüberschuss 204 auf. Hier ist der Speicher richtig geregelt und die Speicherkapazität ist ausreichend. Der Ladevorgang 600 nach dem hier vorgestellten Ansatz beginnt mit einem Ladestartzeitpunkt tstart, der unter Verwendung eines vorausgehenden Überschreitungszeitpunkts $t_1$, eines vorausgehenden Unterschreitungszeitpunkts $t_2$ und eines vorausgehenden Ladeendzeitpunkts $t_{voll}$ eines vorausgehenden Betriebstags der Fotovoltaikanlage ermittelt worden ist. Der Ladevorgang 600 endet mit einem Ladeendzeitpunkt $t_{voll}$. Der Ladestartzeitpunkt $t_{start}$ liegt vor dem Überschreitungszeitpunkt $t_1$. Der Ladeendzeitpunkt $t_{voll}$ liegt nach dem Unterschreitungszeitpunkt $t_2$. Damit deckt der Ladevorgang 600 den gesamten Leistungsüberschuss 204 ab. Dadurch, dass der Ladestartzeitpunkt $t_{start}$ vor dem Überschreitungszeitpunkt $t_1$ und der Ladeendzeitpunkt $t_{voll}$ nach dem Unterschreitungszeitpunkt $t_2$ liegt, überschreitet die in das Netz eingespeiste Leistung der Fotovoltaikanlage nie die Einspeisebegrenzung 202.

Das hier vorgeschlagene Steuerverfahren basiert darauf, dass der Speicher für einen bestimmten Zeitraum zu Beginn des Tages nicht geladen wird.

Die Freigabe des Speichers wird mit $t_{start}$ bezeichnet. Das erste Überschreiten der Einspeisebegrenzung 202 am Tag mit $t_1$ und das letzte Unterschreiten der Einspeisebegrenzung 202 mit $t_2$. Zum Zeitpunkt $t_{voll}$ ist der Speicher komplett geladen.

In Fig. 6 startet die Speichernutzung 400 rechtzeitig, sodass keine Energie verworfen wird.

Das hier vorgeschlagene Verfahren, die Speichernutzung zu sperren, liefert dann korrekte Zustände, wenn die Differenz zwischen $t_1$ und $t_{start}$ positiv ist und die Differenz zwischen $t_{voll}$ und $t_2$ negativ ist. Alternativ kann die Differenz zwischen $t_1$ und $t_{start}$ negativ und die Differenz zwischen $t_{voll}$ und $t_2$ positiv sein.

Es bietet sich daher an, den Zeitpunkt $t_{start}$ aus der Gleichung

$$t_{start} - t_1 = t_2 - t_{voll}$$

herzuleiten.

Da die Größen jedoch erst am Ende des Tages bekannt sind, $t_{start}$ aber für den nächsten Tag voraus festgelegt werden muss, bietet es sich an die Größen $t_1$, $t_2$ und $t_{voll}$ aus dem Vortag oder über eine Mittelung der vorherigen Tage festzulegen. Diese Annahme ist so lange valide, solange sich keine signifikanten Änderungen der Einstrahlung von einem auf den nächsten Tag ergeben. Verlässt die Anlage bedingt durch eine reduzierte Einstrahlung wieder den Bereich der Einspeisebegrenzung 202, so ist der Zeitpunkt $t_{start}$ durch einen Regelalgorithmus oder in festen Schrittweiten zu reduzieren.

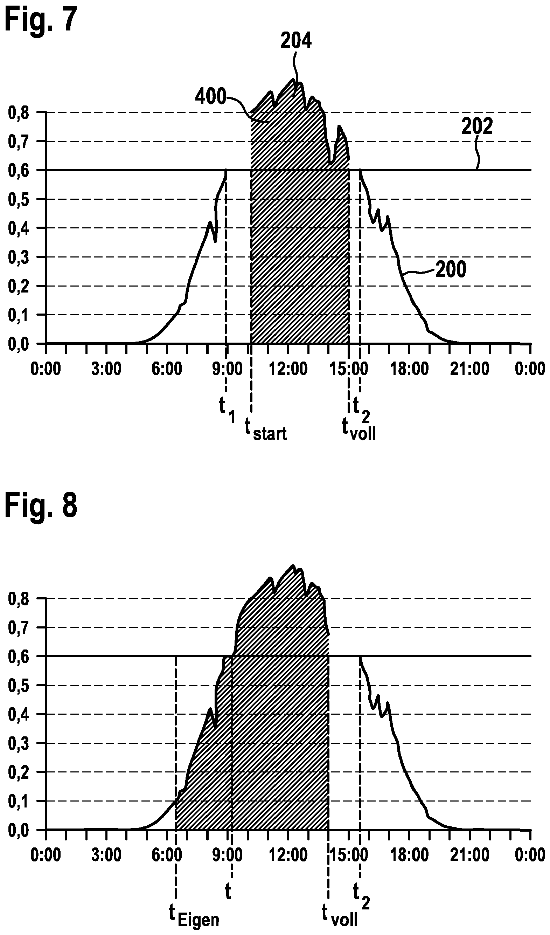

Fig. 7 zeigt eine Darstellung eines Ladevorgangs bei einer zu geringen Speicherkapazität des Energiespeichers. Der Ladevorgang ist anhand eines Tagesgangs 200, wie in Fig. 2 gezeigt. Wie in Fig. 2 weist die Fotovoltaikanlage in den Mittagsstunden einen Leistungsüberschuss 204 auf. Hier ist der Speicher richtig geregelt, aber die Speicherkapazität ist nicht ausreichend. Der Ladestartzeitpunkt $t_{start}$ liegt nach dem Überschreitungszeitpunkt $t_1$. Der Ladeendzeitpunkt $t_{voll}$ liegt vor dem Unterschreitungszeitpunkt $t_2$. Damit deckt der Ladevorgang nicht den gesamten Leistungsüberschuss 204 ab. Vor und nach dem Ladevorgang wird die Leistung der Fotovoltaikanlage auf die Einspeisebegrenzung 202 heruntergeregelt. Damit wird die im Tagesgang 200 zur Verfügung stehende Energie nicht vollständig genutzt. Die zur Verfügung stehende Energie ist hier größer als die speicherbare Energie 400.

In Fig. 7 ist ein Fall dargestellt, der auftritt, wenn die Kapazität des Speichers nicht ausreichend ist. Sowohl nach dem Erreichen der Einspeisebegrenzung 202 zum Zeitpunkt $t_1$, als auch vor dem Verlassen der Einspeisebegrenzung 202 zum Zeitpunkt $t_2$ wird die Anlage außerhalb des MPP betrieben. Dies lässt sich nicht vermeiden, da die Kapazität des Speichers nicht ausreicht, um die gesamte Energie innerhalb des Einspeisezeitraumes aufzunehmen.

Fig. 8 zeigt eine Darstellung eines zu früh begonnenen Ladevorgangs eines Energiespeichers für eine Fotovoltaikanlage. Hier ist der Start der eigenbedarfsoptimierten Betriebsweise zu früh gewählt. Im Wesentlichen entspricht die hier gezeigte Darstellung der Darstellung in Fig. 4. Der Beginn der eigenbedarfsoptimierten Betriebsweise $t_{eigen}$ liegt vor dem Überschreitungszeitpunkt $t_1$. Der Ladeendzeitpunkt $t_{voll}$ liegt vor dem Unterschreitungszeitpunkt $t_2$.

In Fig. 8 ist die Umschaltung auf die eigenbedarfsoptimierte Arbeitsweise zu früh erfolgt. Der Speicher ist vor dem Zeitpunkt $t_2$ voll. Danach wird die Anlage außerhalb des MPP betrieben.

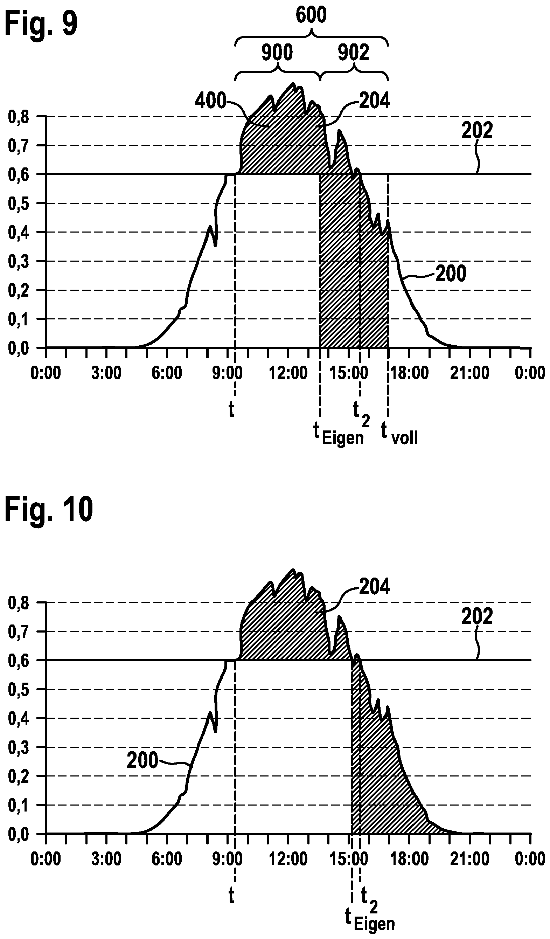

Fig. 9 zeigt eine Darstellung eines Ladevorgangs 600 eines Energiespeichers für eine Fotovoltaikanlage gemäß einem weiteren Ausführungsbeispiel der vorliegenden Erfindung. Der Ladevorgang 600 ist anhand eines Tagesgangs 200, wie in Fig. 2 gezeigt. Wie in Fig. 2 weist die Fotovoltaikanlage in den Mittagsstunden einen Leistungsüberschuss 204 auf. Hier ist der Zeitpunkt $t_{eigen}$ zum Start der Eigenbedarfsoptimierung gegenüber der Darstellung in Fig. 8 angepasst. Der Ladevorgang 600 ist hier in einen ersten Abschnitt 900 und einen zweiten Abschnitt 902 gegliedert. Der erste Abschnitt 900 beginnt mit dem Überschreitungszeitpunkt $t_1$. Im ersten Abschnitt 900 wird der Leistungsüberschuss 204 in den Energiespeicher geleitet und lädt den Energiespeicher auf. Die Leistung der Fotovoltaikanlage unterhalb der Leistungsbegrenzung 202 wird im ersten Abschnitt 900 voll in das Netz eingespeist. Der zweite Abschnitt 902 beginnt zu einem gemäß dem hier vorgestellten Ansatz ermittelten Ladestartzeitpunkt teigen. Im gezeigten Ausführungsbeispiel wird der Ladestartzeitpunkt $t_{eigen}$ basierend auf einem vorausgehenden Unterschreitungszeitpunkt $t_2$ und einem vorausgehenden Ladeendzeitpunkt $t_{voll}$ eines vorausgehenden Betriebstags der Fotovoltaikanlage ermittelt. Dabei wird der Ladestartzeitpunkt $t_{eigen}$ mit einem vorbestimmten Zeitversatz zu dem vorausgehenden Ladeendzeitpunkt $t_{voll}$ ermittelt. Damit kann sichergestellt werden, dass die Speicherkapazität des Energiespeichers durch die zwischen dem Überschreitungszeitpunkt $t_1$ und dem Ladeendzeitpunkt $t_{voll}$ gespeicherte Energiemenge 400 ausgenutzt wird.

Bei dem in Fig. 9 angewandten Verfahren gemäß dem hier vorgestellte Ansatz wird nicht nur die Speichernutzung verzögert, sondern die Art der Speichernutzung über den Tag variiert. Dabei werden die Betriebsweisen über den Tagesverlauf umgeschaltet.

Dazu wird die Anlage bis zum Zeitpunkt $t_{Eigen}$ so betrieben, dass keine Optimierung des Eigenbedarfs stattfindet. Leistung, die über der Einspeisebegrenzung 202 liegt, wird jedoch in den Speicher umgeleitet. Der Leistungsanteil bis zur Einspeisebegrenzung 202 wird ins Netz eingespeist.

Ab dem Zeitpunkt $t_{Eigen}$ läuft die Anlage in Eigenbedarfsoptimierung.

In Fig. 9 wird der Zeitpunkt $t_{Eigen}$ in einem entsprechenden Bereich gewählt, sodass die Kapazität des Speichers voll genutzt wird.

Ähnlich wie der Ladestartzeitpunkt in Fig. 6 kann der Zeitpunkt $t_{Eigen}$ durch eine Betrachtung der Historie des Vortages oder der Vortage ermittelt werden. Dazu bietet es sich an, den Abstand der Zeitpunkte $t_2$ und $t_{voll}$ auf eine feste Differenz zu regeln und als Stellgröße $t_{Eigen}$ zu nutzen. In einer weiteren Variante kann $t_{Eigen}$ in festen Abständen je nach Zustand des Systems am Vortag erhöht oder reduziert werden.

Fig. 10 zeigt eine Darstellung eines zu spät begonnenen Ladevorgangs eines Energiespeichers für eine Fotovoltaikanlage. Hier ist der Zeitpunkt $t_{eigen}$ zum Start der Eigenbedarfsoptimierung zu spät gewählt. Wie in dem Ladevorgang in Fig. 9 wird die im Tagesgang 200 erzeugte Leistung der Fotovoltaikanlage ab der Morgendämmerung in das Netz eingespeist. Ab dem Überschreitungszeitpunkt $t_1$ wird der Leistungsüberschuss 204, der über der Einspeisebegrenzung 202 liegt, in den Energiespeicher geleitet, während die Leistung bis zur Einspeisebegrenzung 202 weiterhin in das Netz eingespeist wird. Der Zeitpunkt $t_{eigen}$ zum Start der Eigenbedarfsoptimierung liegt hier kurz vor dem Unterschreitungszeitpunkt $t_2$. Nach dem Start $t_{eigen}$ der Eigenbedarfsoptimierung bis zur Abenddämmerung wird von der Fotovoltaikanlage nicht mehr genug Energie produziert, dass der Energiespeicher ganz gefüllt werden kann. Daher ist in Fig. 10 kein Ladeendzeitpunkt $t_{voll}$ gezeigt.

In Fig. 10 wird der Zeitpunkt $t_{Eigen}$ zu spät gewählt. Der Speicher wird nicht vollgeladen. Hier könnte durch einen früheren Umschaltzeitpunkt mehr Energie für den Eigenverbrauch genutzt werden.

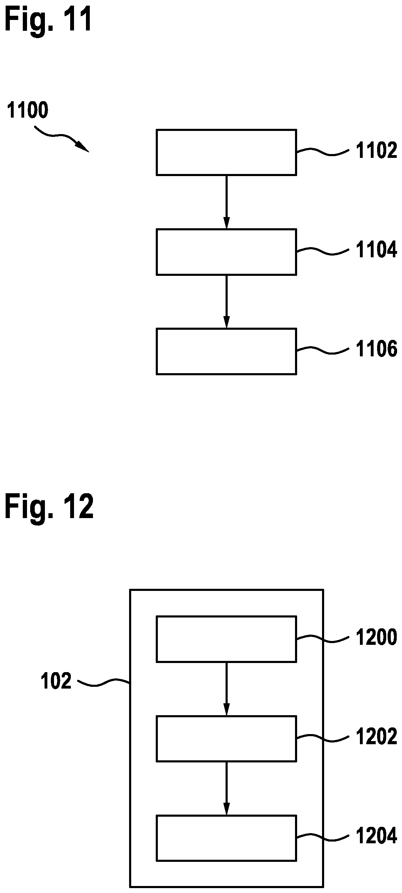

Fig. 11 zeigt ein Ablaufdiagramm eines Verfahrens 1100 zum Betreiben eines Energiespeichers für eine Fotovoltaikanlage gemäß einem Ausführungsbeispiel der vorliegenden Erfindung. Die Fotovoltaikanlage unterliegt einer Einspeisebegrenzung in ein öffentliches Energienetz. Das Verfahren 1100 weist einen Schritt 1102 des Einlesens, einen Schritt 1104 des Ermittelns und einen Schritt 1106 des Bereitstellens auf. Im Schritt 1102 des Einlesens wird zumindest ein Kennwert der Fotovoltaikanlage und/oder des Energiespeichers zu zumindest einem, einem aktuellen Betriebstag vorausgehenden Betriebstag der Fotovoltaikanlage eingelesen. Im Schritt 1104 des Ermittelns wird ein Ladestartzeitpunkt des Energiespeichers für den aktuellen Betriebstag unter Verwendung des Kennwerts des vorausgehenden Betriebstags und einer Verarbeitungsvorschrift ermittelt. Im Schritt 1106 des Bereitstellens wird ein Ladesignal für den Energiespeicher zu dem ermittelten Ladestartzeitpunkt des aktuellen Betriebstags bereitgestellt, um den Energiespeicher zu betreiben.

In einem Ausführungsbeispiel wird im Schritt 1102 des Einlesens als Kennwert ein Überschreitungszeitpunkt, ein Unterschreitungszeitpunkt und/oder ein Ladeendzeitpunkt eingelesen. Der Überschreitungszeitpunkt repräsentiert ein erstmaliges Erreichen der Einspeisebegrenzung durch eine abgegebene Leistung der Fotovoltaikanlage an dem zumindest einen vorausgehenden Betriebstag. Der Unterschreitungszeitpunkt repräsentiert ein letztmaliges Unterschreiten der Einspeisebegrenzung durch die abgegebene Leistung an dem zumindest einen vorausgehenden Betriebstag. Der Ladeendzeitpunkt repräsentiert ein Erreichen einer Speicherkapazität des Energiespeichers an dem zumindest einen vorausgehenden Betriebstag.

In einem Ausführungsbeispiel wird im Schritt 1102 des Einlesens der Überschreitungszeitpunkt, der Unterschreitungszeitpunkt und/oder der Ladeendzeitpunkt über zumindest zwei Betriebstage gemittelt eingelesen.

In einem Ausführungsbeispiel weist das Verfahren einen Schritt des Erfassens von zumindest einem Kennwert des aktuellen Betriebstags auf. Im Schritt 1102 des Einlesens wird ferner eine aktuell abgegebene Leistung der Fotovoltaikanlage und/oder ein aktueller Zustand des Energiespeichers eingelesen. Im Schritt des Erfassens wird als Kennwert des aktuellen Betriebstags ein erstmaliges Erreichen der Einspeisebegrenzung durch die abgegebene Leistung der Fotovoltaikanlage an dem aktuellen Betriebstag als Überschreitungszeitpunkt und/oder ein letztmaliges Unterschreiten der Einspeisebegrenzung durch die abgegebene Leistung an dem aktuellen Betriebstag als Unterschreitungszeitpunkt und/oder ein Erreichen der Speicherkapazität des Energiespeichers an dem aktuellen Betriebstag als Ladeendzeitpunkt erfasst.

In einem Ausführungsbeispiel wird im Schritt des Einlesens 1102 als Kennwert ferner eine aktuell abgegebene Leistung der Fotovoltaikanlage eingelesen. Im Schritt 1104 des Ermittelns wird ein Teilladestartzeitpunkt ermittelt, an dem die aktuell abgegebene Leistung die Einspeisebegrenzung erreicht. Im Schritt 1106 des Bereitstellens wird ein Teilladesignal für den Energiespeicher zu dem ermittelten Teilladestartzeitpunkt bereitgestellt, um die, die Einspeisebegrenzung übersteigende Leistung der Fotovoltaikanlage in dem Energiespeicher zu speichern.

In einem Ausführungsbeispiel wird im Schritt 1104 des Ermittelns der Ladestartzeitpunkt so ermittelt, dass der Ladeendzeitpunkt des vorausgehenden Betriebstags einen vorbestimmten Zeitversatz zu dem Unterschreitungszeitpunkt des vorausgehenden Betriebstags aufweist.

In einem Ausführungsbeispiel werden im Schritt des Einlesens 1102 ferner ein Einspeisezeitpunkt und ein Ladezustand des Energiespeichers eingelesen. Im Schritt 1106 des Bereitstellens wird zu dem Einspeisezeitpunkt ein Einspeisesignal für den Energiespeicher bereitgestellt, um Energie in das öffentliche Energienetz einzuspeisen, wenn der Energiespeicher noch eine einspeisbare Ladung aufweist.

In einem Ausführungsbeispiel wird im Schritt 1104 des Ermittelns der Ladestartzeitpunkt so festgelegt, dass er vor dem Überschreitungszeitpunkt liegt.

Das hier vorgestellte Steuerverfahren 1100 basiert auf der Annahme, dass der Speicher morgens möglichst entladen ist. Es wird daher vorgeschlagen, im Rahmen des oben genannten Verfahrens 1100 überschüssige Energie nachts ins Netz einzuspeisen und so den gewünschten Ladezustand durch eine Entladeprozedur einzustellen. Dabei kann der Speicher entladen werden bzw. eine definierte Reserve für den Fall einer Netzunterbrechung erhalten bleiben. Das Entladen kann über einen Uhrzeit-Parameter gesteuert werden, nach dem das System diese Entladung starten kann.

Begleitend zu dem vorgeschlagenen Verfahren 1100 kann durch eine überlagerte Regelung oder Steuerung die Betriebsweise des Systems verfeinert werden. Beispielsweise kann durch eine monetäre Bewertung der eingespeicherten und eingespeisten Energie eine Ertragsoptimierung stattfinden. Dazu kann die eingespeiste Energie mit der Einspeisevergütung, die gespeicherte Energie oberhalb der Einspeisebegrenzung mit einer durch den Wirkungsgrad des Speichers gewichteten Einspeisevergütung und die eigenverbrauchte Energie mit der Differenz zwischen Bezugskosten und Einspeisevergütung bewertet werden. Darüber hinaus kann durch eine ungewichtete Bewertung der Energieerträge aus der Anlage eine energetische Optimierung des Systems vorgenommen werden.

Der hier vorgestellte Ansatz verbessert die Energieausbeute von PV-Speichersystemen bei Kappung der Einspeisespitze. Darüber hinaus benötigt das System keine zusätzliche Hardware oder Ankopplung an eine Wettervorhersage, um die notwendigen Einstellungen vorzunehmen.

Fig. 12 zeigt ein Blockschaltbild eines Steuergeräts 102 zum Steuern eines PV-Speichersystems bzw. zum Betreiben eines Energiespeichers für eine Fotovoltaikanlage gemäß einem Ausführungsbeispiel der vorliegenden Erfindung. Die Fotovoltaikanlage unterliegt einer Einspeisebegrenzung in ein öffentliches Energienetz. Das Steuergerät 102 weist eine Einrichtung 1200 zum Einlesen, eine Einrichtung 1202 zum Ermitteln und eine Einrichtung 1204 zum Bereitstellen auf. Die Einrichtung 1200 zum Einlesen ist dazu ausgebildet, zumindest einen Kennwert der Fotovoltaikanlage und/oder des Energiespeichers zu zumindest einem, einem aktuellen Betriebstag vorausgehenden Betriebstag der Fotovoltaikanlage einzulesen. Die Einrichtung 1202 zum Ermitteln ist dazu ausgebildet, einen Ladestartzeitpunkt des Energiespeichers für den aktuellen Betriebstag unter Verwendung des Kennwerts des vorausgehenden Betriebstags und einer Verarbeitungsvorschrift zu ermitteln. Die Einrichtung 1204 zum Bereitstellen ist dazu ausgebildet, ein Ladesignal für den Energiespeicher zu dem ermittelten Ladestartzeitpunkt des aktuellen Betriebstags bereitzustellen, um den Energiespeicher zu betreiben.

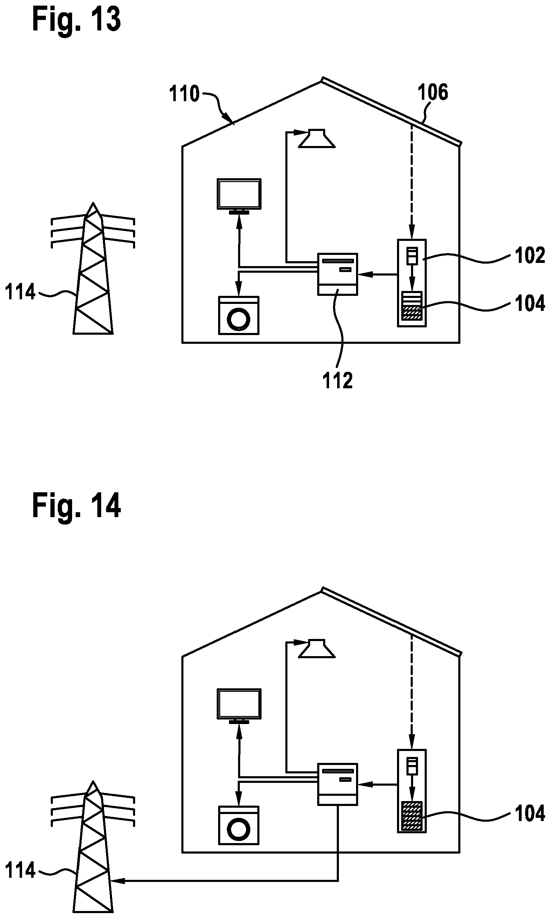

Fig. 13 zeigt eine Darstellung eines Haushalts beim Speichern von Energie gemäß einem Ausführungsbeispiel der vorliegenden Erfindung. Der Haushalt entspricht im Wesentlichen dem Haus in Fig. 1. Hier sind die Fotovoltaikmodule 106 mit dem Steuergerät 102 verbunden, das in den Energiespeicher 104 integriert ist. Die Fotovoltaikmodule 106 können als PV-Generator 106 bezeichnet werden. Das Steuergerät 102 kann als Energiemanagementsystem EMS 102 bezeichnet werden. Der Energiespeicher 104 kann als Batterie 104 bezeichnet werden. Der Wechselrichter ist hier nicht dargestellt. Das Steuergerät 102 ist mit einem Verteiler für das Hausnetz 110 des Haushalts verbunden. Der Energiezähler 112 ist in dem Verteiler angeordnet. Über den Energiezähler 112 ist das Hausnetz 110 mit dem öffentlichen Stromnetz 114 verbunden.

Das Hausnetz 110 umfasst die Verbraucher des Haushalts. Hier sind beispielhaft ein Fernseher, eine Waschmaschine und eine Lampe dargestellt. An den hier dargestellten Komponenten wird die Funktionsweise eines PV-Speichersystems dargestellt.

In Fig. 13 ist der Haushalt am Vormittag dargestellt. Die im PV-Generator 106 produzierte Energie wird vorrangig zur Optimierung des Eigenverbrauchs genutzt. Überschüssige Energie wird zum Aufladen der integrierten Lithium-Ionen Batterien 104 genutzt.

Fig. 14 zeigt eine Darstellung eines Haushalts beim Einspeisen von Energie gemäß einem Ausführungsbeispiel der vorliegenden Erfindung. Der Haushalt entspricht dem Haushalt in Fig. 13. Am Nachmittag ist der Energiespeicher 104 voll. Bei voll aufgeladenen Batterien 104 versorgt das System den Eigenverbrauch und speist überschüssige Energie ins Stromnetz 114 ein.

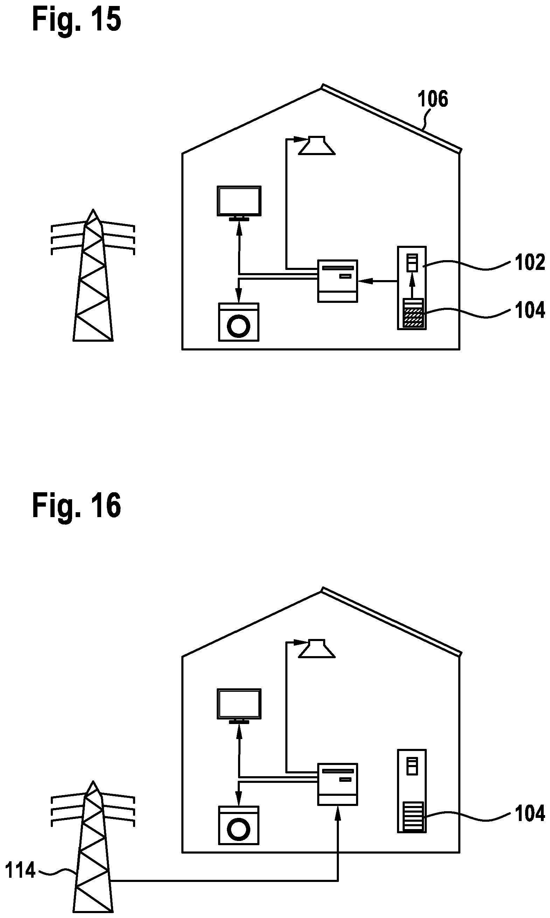

Fig. 15 zeigt eine Darstellung eines Haushalts beim Verbrauchen von gespeicherter Energie gemäß einem Ausführungsbeispiel der vorliegenden Erfindung. Der Haushalt entspricht dem Haushalt in den Figuren 13 und 14. Am Abend wird in den Fotovoltaikmodulen 106 kein Strom mehr produziert. Nach Sonnenuntergang stellt das System Energie aus der Batterie 104 zur Verfügung. Das EMS 102 hilft, Eigenverbrauchsquoten von 70% und mehr zu erreichen.

Fig. 16 zeigt eine Darstellung eines Haushalts beim Beziehen von Energie aus dem Stromnetz 114 gemäß einem Ausführungsbeispiel der vorliegenden Erfindung. Der Haushalt entspricht dem Haushalt in den Figuren 13, 14 und 15.

In der Nacht ist der Energiespeicher 104 leer. Sollte die Kapazität der Batterie 104 nicht ausreichen, wird Strom aus dem öffentlichen Netz 114 bezogen, um den Strombedarf zu decken.

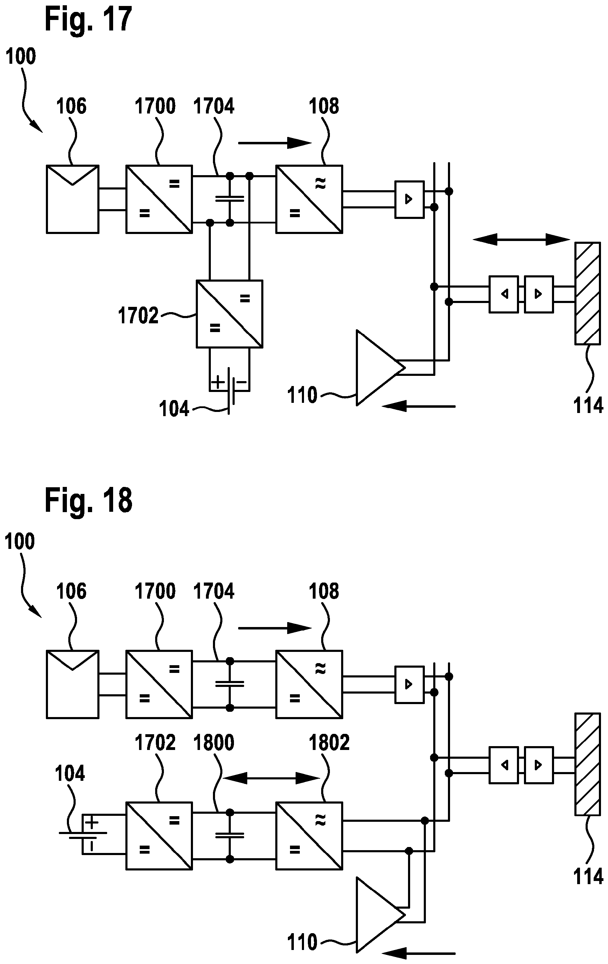

Fig. 17 zeigt eine Darstellung eines Gleichstromspeichers 104 gemäß einem Ausführungsbeispiel der vorliegenden Erfindung. Der Gleichstromspeicher 104 ist Teil eines Fotovoltaiksystems 100. Das Fotovoltaiksystem 100 weist Fotovoltaikmodule 106, einen Maximum-Power-Point-Tracker 1700, einen Wechselrichter 108 sowie einen Batterieladeregler 1702 auf. Der Gleichstromspeicher 104 ist über den Batterieladeregler 1702 mit einem Gleichstrom-Zwischenkreis 1704 zwischen dem Maximum-Power-Point-Tracker 1700 und dem Wechselrichter 108 verbunden. Der Maximum-Power-Point-Tracker 1700 ist dazu ausgebildet, eine von den Fotovoltaikmodulen 106 abgegebene elektrische Energie zu maximieren, indem die Energie mit einer angepassten Spannung und einer angepassten Stromstärke abgenommen wird. Der Maximum-Power-Point-Tracker 1700 ist dazu ausgebildet, eine Zwischenkreisspannung in den Zwischenkreis 1704 einzuspeisen. Der Wechselrichter 108 wird durch den Zwischenkreis 1704 gespeist. Der Wechselrichter 108 formt aus der Zwischenkreisspannung, die eine Gleichspannung ist, die Netzspannung, die eine Wechselspannung ist. Der Batterieladeregler 1702 ist dazu ausgebildet, beim Laden der Batterie 104 die Gleichspannung im Zwischenkreis 1704 in eine einen momentanen Ladezustand der Batterie 104 angepasste Batteriespannung und/oder Stromstärke zu wandeln. Im umgekehrten Weg ist der Batterieladeregler 1702 beim Entladen der Batterie 104 dazu ausgebildet, die momentane Batteriespannung in die Zwischenkreisspannung zu wandeln. Bei dem hier gezeigten DC-System 100 wird der Wechselrichter 108 entsprechend der im Haushalt 110 vorhandenen Lasten geregelt und speist nur so viel Leistung ins Netz 114, wie aktuell verbraucht wird.

Fig. 18 zeigt eine Darstellung eines Wechselstromspeichers 104 gemäß einem Ausführungsbeispiel der vorliegenden Erfindung. Das hier gezeigte Fotovoltaiksystem 100 weist im Wesentlichen die gleichen Komponenten auf, wie das in Fig. 17 dargestellte Fotovoltaiksystem. Im Gegensatz dazu ist der Energiespeicher 104 mit seinem zugehörigen Batterieladeregler 1702 über einen separaten Zwischenkreis 1800 und einen eigenen Wechselrichter 1802 mit dem Hausnetz 110 verbunden. Die Fotovoltaikmodule 106 sind über ihren Maximum-Power-Point-Tracker 1700, den Zwischenkreis 1704 und den Wechselrichter 108 mit dem Hausnetz 110 verbunden. In diesem Ausführungsbeispiel kann der Energiespeicher 104 leicht räumlich getrennt von den restlichen Komponenten des Fotovoltaiksystems 100 angeordnet sein. Im dargestellten Ausführungsbeispiel wird das AC-System 100 als Nulleinspeiser betrieben. Der Eigenverbrauch erfolgt über die Beladung und Entladung der Batterie 104 unabhängig davon, ob im Haushalt 110 Strom genutzt wird, oder nicht. Die Entladung der Batterie 104 erfolgt bei dem Nulleinspeiser darüber, dass Verbraucher direkt vom Speichersystem 104 aus versorgt werden. Eine Auslegung als Volleinspeiser ist ebenso möglich. Dann ist der Betrieb analog zum in Fig. 17 dargestellten DC-System zu sehen.

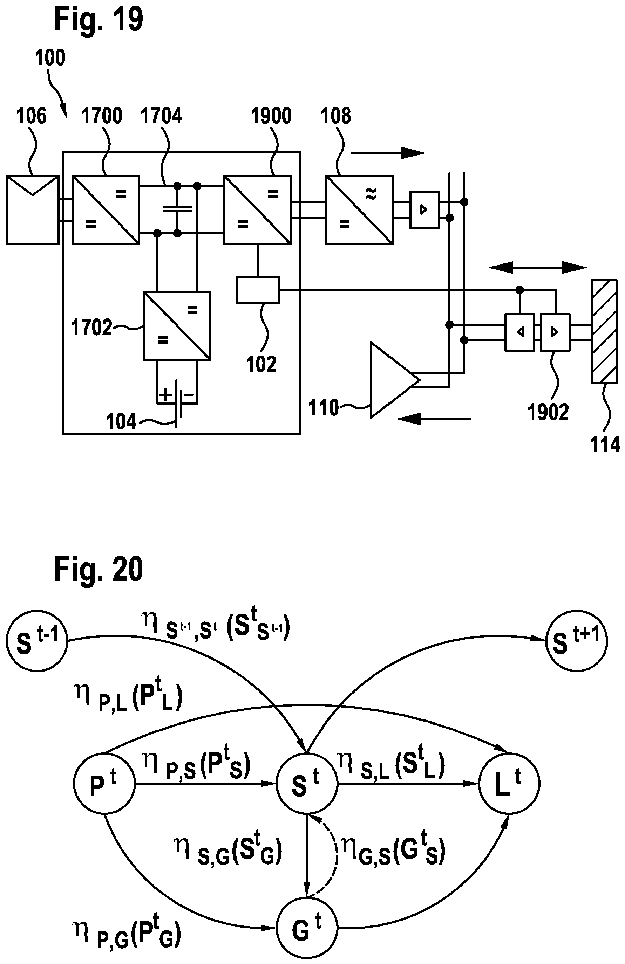

Fig. 19 zeigt eine Darstellung eines gesteuerten Gleichstromspeichers 104 gemäß einem Ausführungsbeispiel der vorliegenden Erfindung. Das hier dargestellte Fotovoltaiksystem 100 entspricht im Wesentlichen dem in Fig. 17 dargestellten Fotovoltaiksystem. Zusätzlich ist in dem Zwischenkreis 1704 ein virtueller Fotovoltaikgenerator 1900 angeordnet. Der virtuelle Generator 1900 wird von dem Zwischenkreis 1704 gespeist und wandelt die Gleichspannung im Zwischenkreis 1704 in eine kontrollierte Gleichspannung um. Der Wechselrichter 108 wird von der kontrollierten Gleichspannung speist. Der virtuelle Generator 1900 wird durch ein Steuergerät 102 kontrolliert. Das Steuergerät 102 ist weiterhin mit einer Schnittstelle 1902 zum öffentlichen Netz 114 verbunden. Das Steuergerät 102 kann als Energiemanagementsystem EMS 102 bezeichnet werden.

Mit anderen Worten zeigt Fig. 19 eine schematische Darstellung eines PV-DC-Systems 100. Das System 100 wird zwischen einem Wechselrichter 108 und einer PV-Anlage 106 installiert. Das System 100 verfügt über einen eigenen MPP-Tracker 1700, um den optimalen Arbeitspunkt des Solargenerators 106 einzustellen. Der Batterieladeregler 1702 dient zur Beladung und Entladung der Batterie 104. Der virtuelle PV-Generator 1900 erzeugt eine UI-Kennlinie, die einem PV-Generator mit einer Zielleistung entspricht, sodass der ursprüngliche Wechselrichter 108 sich auf die Zielleistung einregelt.

PV Speichersysteme 100 können in eine erste Produktgruppe von DC-gekoppelten Speichersystemen und eine zweite Produktgruppe von ACgekoppelten Speichersystemen unterteilt werden. Alternative Topologien können umgesetzt werden.

Diese Systeme 100 speichern überschüssigen Solarstrom in eine Batterie 104 ein. Die Batterie 104 ist dabei in unterschiedlichen Verhältnissen in Reihe und/oder parallel geschaltet. Bei DC-gekoppelten Systemen 100 werden hohe Batteriespannungen bevorzugt, wodurch alle Module eines Speicherblocks 104 in Reihe geschaltet sind, sodass die Gesamtbatteriespannung möglichst nah an der DC-Zwischenkreisspannung liegt. Bei AC-Systemen werden vermehrt Kombinationen aus parallel geschalteten Modulen 104 verwendet, die aus in Serie geschalteten Blöcken bestehen.

Die grundlegende Funktionsweise ist in allen PV-Speicher Systemen 100 die gleiche. Wird PV-Strom produziert, werden zunächst die Verbraucher im Haushalt 110 versorgt. Sobald die PV-Anlage 100 einen Überschuss generiert, wird dieser dazu genutzt, die Batterie 104 zu laden. Wenn gegen Nachmittag die Batterie 104 voll ist, werden weitere Überschüsse ins Netz 114 eingespeist. Am Abend, wenn die PV-Leistung geringer ist, als der Haushaltsverbrauch, wird die Batterie 104 entladen und dient so lange zur Versorgung der Lasten 110, bis die Batterie 104 leer ist. Dann wird Strom aus dem Netz 114 bezogen, bis am nächsten Morgen die Sonne wieder genug Strom produziert.

Das EEG, wie auch das Marktanreizprogramm des BMUs fordern eine Beschränkung der eingespeisten Leistung auf einen bestimmten Prozentsatz der installierten PV-Leistung. Beim EEG sind dies 70%. Das Marktanreizprogramm sieht 60% vor. Weitere Reduzierungen sind möglich und werden diskutiert. Grundsätzlich sind PV-Speichersysteme 100 in der Lage diese Energie zwischenzuspeichern, sodass keine Abregelung notwendig ist und weniger Verluste auftreten.

Durch den hier vorgestellten Ansatz kann ein Speichersystem 100 die Batterie 104 laden, ohne in den Nachmittagsstunden den Wechselrichter 108 abregeln zu müssen.

Fig. 20 zeigt eine Darstellung von Leistungsflüssen an einem Fotovoltaiksystem gemäß einem Ausführungsbeispiel der vorliegenden Erfindung. Dabei sind die Leistungsflüsse anhand eines vereinfachten Leistungsfluss-Problems eines PV-Speichersystems dargestellt. Produktion und Haushaltsverbrauch sind jeweils vorgegeben. Dabei ist $P^t$ in [W] die Leistung, die vom PV-Generator zum Zeitpunkt t maximal bereitgestellt werden kann. $P_S^t$, $P_G^t$, $P_L^t$ in [W] ist die Leistung, die zum Zeitpunkt t vom PV-Generator zum Speicher ( $P_S^t$ ), zum Verbraucher ( $P_L^t$ ) oder ins Netz ( $P_G^t$ ) fließt. $S_L^t$, $S_G^t$ in [W] ist die Leistung, die zum Zeitpunkt t aus dem Speicher zum Verbraucher ( $S_L^t$ ) oder ins Netz fließt ( $S_G^t$ ). $S^{t-1}$, $S^{t+1}$ in [Wh] ist die Energie, die in der Vergangenheit ($S^{t-1}$) in der Batterie gespeichert wurde, oder für den nächsten Zeitpunkt in der Batterie gespeichert wird ($S^{t+1}$). $G_S^t$, $G_L^t$ in [W] ist die Leistung, die zum Zeitpunkt t vom Netz zum Laden des Speichers ( $G_S^t$ ) oder zur Deckung des Verbrauchs ( $G_L^t$ ) bezogen wird. $\eta_{XY}(M_Y)$ ist der Wirkungsgrad des Transportes der Leistung $M$ von $X$ nach $Y$.

Die Funktionsweise eines PV-Speichersystems kann, unabhängig von der verwendeten Topologie durch seine Leistungsflüsse beschrieben werden. Für die Beschreibung des Systems reichen vier Knoten, die die unterschiedlichen Quellen und Senken des Systems beschreiben. Dabei stellt $P^t$ die zum Zeitpunkt t am PV-Generator abrufbare Leistung dar. $S^t$ stellt die zum Zeitpunkt t in die Batterie gespeicherte oder aus der Batterie abrufbare Energie dar. $L^t$ entspricht der zum Zeitpunkt t benötigte Leistung zur Versorgung der Verbraucher in einem Haushalt, während $G^t$ die Leistung, die in das Netz gespeist oder vom Netz abgerufen wird repräsentiert.

Das Verhalten eines PV-Speichersystems kann durch drei Bilanzgleichungen dargestellt werden. Die Leistungszuflüsse und Leistungsabflüsse am Verbraucher ergänzen sich zu null, wenn keine weiteren Quellen außer der PV-Anlage P, dem Speicher S und dem Netz G vorhanden sind.

$$L^t - \left(G_L^t + \eta_{P,L}P_L^t + \eta_{S,L}S_L^t\right) = 0 \qquad (1)$$

Die Leistungszuflüsse und Leistungsabflüsse am Speicher ergänzen sich zu null.

$$\eta_{P,S}P_S^t + \eta_{G,S}G_S^t + \frac{\eta_{S^{t-1},S^t}S^{t-1}}{\Delta t} - \left(\frac{S^{t+1}}{\Delta t} + S_G^t + S_L^t\right) = 0 \qquad (2)$$

Die Summe der Leistungsabflüsse von der PV-Anlage in den Speicher, die Last oder das Netz sind maximal so groß wie die installierte PV-Leistung.

$$P_S^t + P_L^t + P_G^t \leq P^t \qquad (3)$$

Weiterhin gelten noch die Netzanschlussbedingungen mit dem möglichen Abregelungskriterium $x\%P_{inst}$.

$$-AC_{max} \leq \eta_{P,G}P_G^t + \eta_{S,G}S_G^t - G_L^t - G_S^t \leq x\%P_{inst} \cdot \qquad (4)$$

Dabei ist $AC_{max}$ die maximale Anschlussleistung und $P_{inst}$ die installierte Leistung des PV-Generators.

Zusätzlich sind Richtlinien wie z.B. die VDE-AR-N 4105 einzuhalten. Diese begrenzt die einphasige Einspeisung auf 4,6 kVA. Um dies darzustellen muss unterschieden werden, ob es sich um ein DC-System oder ein AC-System handelt. Für ein AC-System werden beide Komponenten als Einspeiser angesehen, daher gelten die Einspeiserandbedingungen für beide Komponenten:

$$\eta_{P,G}P_G^t + \eta_{P,L}P_L^t + \eta_{P,S}P_S^t \leq 4.6 \ kW \qquad (5)$$

sowie

$$\eta_{S,G}S_G^t + \eta_{S,L}S_L^t - \eta_{G,S}G_S^t \leq 4.6 \ kW \qquad (6)$$

Da Batteriesystem und PV-Anlage als getrennte Einspeiseanlagen anzusehen sind und jeweils einzeln die Richtlinien erfüllen müssen.

Bei einem DC-System gilt hingehen

$$\eta_{P,G}P_G^t + \eta_{P,L}P_L^t + \eta_{S,L}S_L^t + \eta_{S,G}S_G^t - \eta_{G,S}G_S^t \leq 4.6 \ kW \qquad (7)$$

Die Aufgabe des Energiemanagementsystems EMS besteht darin, zu jedem Zeitpunkt die Verteilung der Lastflüsse zu optimieren. Dies erfolgt beispielsweise über eine monetäre Bewertung der Leistungs- und Energieflüsse. Wenn

$$Y_t = Y_{PS} + Y_{PG} + Y_{PL} + Y_{SL} + Y_{SG} + Y_{GL} + Y_{GS} + Y_{SS}$$

der Ertrag, der mit einer bestimmten Kombination von Leistungs- und Energieflüssen erzielt werden kann, ist, so besteht die Aufgabe des EMS darin, diesen zu optimieren.

$$\forall t : \max V_t$$

Bei dem hier vorgestellten Ansatz greift eine Prognoseeinheit in das System dahin gehend ein, dass zwei Größen ermittelt werden. Der Zeitpunkt $t_P$, ab dem ein Peak-Shaving benötigt wird, und die benötigte Batteriekapazität $K_P$. Mit Peak-Shaving wird dabei die Speicherung der einzuspeisenden Leistung oberhalb einer gewünschten Leistung bezeichnet.

$t_p$ und $K_P$ werden dem EMS mitgeteilt. Das EMS erweitert nun das bisherige Gleichungssystem durch eine weitere Nebenbedingung.

$$t < t_b : \kappa_{max} = K - \kappa_p$$

$$t > t_b : \kappa_{max} = K$$

Wobei K die maximal verwendete Batteriekapazität darstellt. $K_{max}$ stellt die verwendete maximale Kapazität dar. Das Verfahren arbeitet also so, dass es eine bestimmte Kapazität bis zu einem bestimmten Zeitpunkt für das Peakshaving reserviert und danach zur Benutzung freigibt.

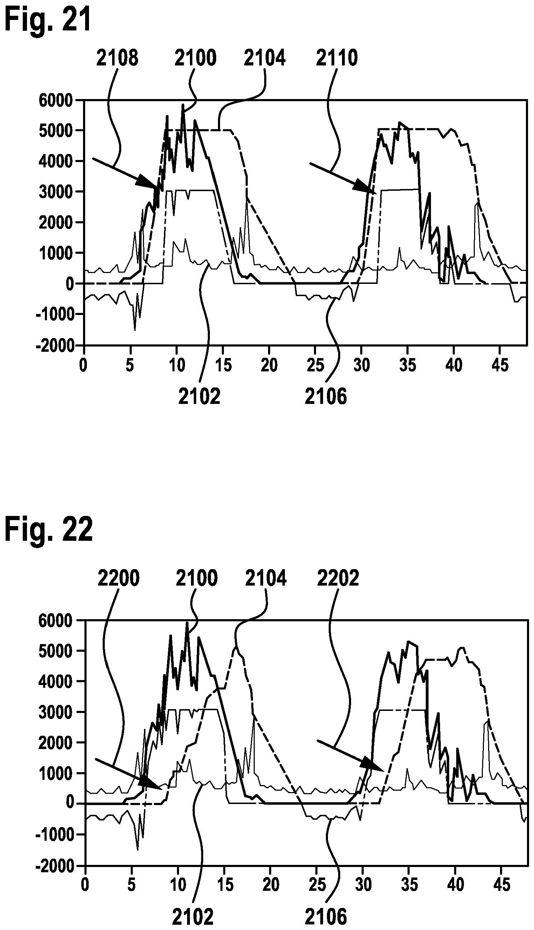

Fig. 21 zeigt eine Darstellung von Leistungsflüssen an einem Fotovoltaiksystem mit Abregelung. Die Leistungsflüsse sind in einem Diagramm dargestellt. Das Diagramm hat auf seiner Abszisse eine Zeit t in Stunden h auf der Ordinate hat das Diagramm eine Leistung in Watt W aufgetragen. In diesem Ausführungsbeispiel ist die Leistung zwischen null und 6000 W und null und minus 2000 W aufgetragen. Dabei steht die positive Leistung für ein Einspeisen ins Netz beziehungsweise für einen Verbrauch und die negative Leistung für einen Bezug aus dem Netz. Die Leistungsflüsse sind als Kurven 2100, 2102, 2104, 2106 dargestellt. Eine erste Kurve 2100 beziehungsweise eine Leistungskurve 2100 repräsentiert eine aktuelle Leistung der Fotovoltaik Module.

Eine zweite Kurve 2102 beziehungsweise eine Verbrauchskurve 2102 repräsentiert einen aktuellen Verbrauch des Haushalts. Eine dritte Kurve 2104 beziehungsweise eine Speicherkurve 2104 repräsentiert eine momentan in der Batterie gespeicherte Leistung. Eine vierte Kurve 2106 beziehungsweise eine Netzkurve 2106 repräsentiert eine ins Netz eingespeiste Leistung beziehungsweise eine aus dem Netz bezogene Leistung. Die Leistung der Fotovoltaikmodule ist von der Sonneneinstrahlung abhängig. Damit weist die Leistungskurve 2100 einen ausgeprägten Tagesgang auf. In den Nachtstunden produzierte Fotovoltaikanlage keinen Strom. Der Verbrauch des Haushalts ist abhängig von der Tageszeit. Insbesondere weist der die Verbrauchskurve 2102 ein erstes Maximum in den Morgenstunden, ein zweites Maximum in den Mittagsstunden und ein drittes Maximum in den Abendstunden auf.

Im hier dargestellten Beispiel resultiert die Speicherkurve 2104 aus einer Differenz zwischen der Leistungskurve 2100 und der Verbrauchskurve 2102. Wenn der Haushalt mehr Strom verbraucht, als die Fotovoltaikanlage inklusive des Speichers bereitstellen kann, wird Leistung aus dem Netz bezogen. Dann weist die Netzkurve 2106 einen negativen Ausschlag auf. Hier wird zuerst die Batterie aufgeladen. Das heißt, in dem Moment, in dem die Leistungskurve 2100 über die Verbrauchskurve 2102 steigt, steigt die Speicherkurve 2104 und Strom wird in der Batterie gespeichert. Wenn die maximale Speicherkapazität der Batterie erreicht ist, wird die Energie ins Netz eingespeist, die Netzkurve 2106 steigt. Die Einspeisung ins Netz unterliegt einer Einspeisebegrenzung. Das heißt, es darf maximal eine festgelegte Leistung in das Netz abgegeben werden. Wenn die Solaranlage mehr Leistung zur Verfügung stellt, als in das Netz eingespeist werden darf, wird die Solaranlage auf einen niedrigeren Wirkungsgrad gedrückt, um die bereitgestellte Leistung an die maximal verwendbare Leistung anzupassen. Ab dem Zeitpunkt, an dem die Leistungskurve 2100 unter die Verbrauchskurve 2102 sinkt, wird die Batterie entladen. Die Speicherkurve 2104 sinkt also. Wenn die Batterie entladen ist, die Speicherkurve 2104 also auf null gesunken ist, wird Leistung aus dem Netz bezogen. Die Pfeile 2108 und 2110 markieren jene Zeitpunkte, an der bei bisheriger Betriebsweise eine Abregelung stattfindet, da die Batterie vollständig geladen, aber die produzierte Leistung oberhalb der geforderten Grenze ist.

Mit anderen Worten zeigt Fig. 21 den Betrieb eines PV-Speichersystems. Dargestellt sind die PV-Produktion 2100, der Verbrauch (Load) 2102, der Leistungsfluss am Netzanschlusspunkt $P_{PCC}$ 2106, sowie der Batterieladezustand (SOC) 2104. Die Pfeile 2108, 2110 markieren jenen Zeitpunkt, an dem eine Abregelung der PV-Leistung erfolgt, da der Speicher bereits komplett gefüllt ist.

Fig. 22 zeigt eine Darstellung von Leistungsflüssen an einem Fotovoltaiksystem ohne Abregelung gemäß einem Ausführungsbeispiel der vorliegenden Erfindung. Die Leistungskurve 2100 und die Verbrauchskurve 2102 entsprechen den Kurven in Fig. 21. In diesem Ausführungsbeispiel wird zuerst Leistung ins Netz abgegeben, bevor die Batterie geladen wird. Damit steigt die Netzkurve 2106 in dem Moment an, in dem die Leistungskurve 2100 die Verbrauchskurve 2102 übersteigt. Wenn die Netzkurve 2106 an die Leistungsbegrenzung kommt, wird der mehr produzierte Strom in der Batterie gespeichert. Damit steigt die Speicherkurve 2104 in diesem Ausführungsbeispiel deutlich langsamer, als in Fig. 21. Insgesamt wird deutlich mehr Energie ins Netz abgegeben, als in Fig. 21. Die Batterie wird nur näherungsweise vollgeladen, bevor die Leistungskurve 2100 in den Nachmittagsstunden abfällt. Dabei kann jedoch die gesamte von der Fotovoltaikanlage erzeugte Energie genutzt werden.

Mit anderen Worten zeigt Fig. 22 den Betrieb eines PV-Speichersystems gemäß einem Ausführungsbeispiel der vorliegenden Erfindung. Dargestellt ist die PV-Produktion 2100, der Verbrauch 2102, der Leistungsfluss am Netzanschlusspunkt $P_{PCC}$ 2106, sowie der Batterieladezustand (SOC) 2104. Die Pfeile 2200, 2202 markieren jenen Zeitpunkt, an dem eine Speicherung der PV-Leistung erfolgt, sodass keine Abregelung notwendig wird.

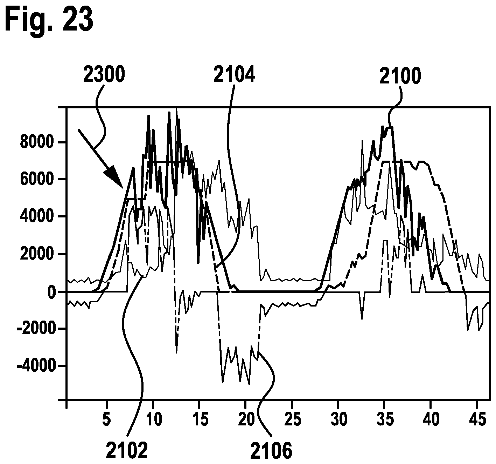

Fig. 23 zeigt eine Darstellung von Leistungsflüssen an einem kapazitätsgeführten Fotovoltaiksystem gemäß einem Ausführungsbeispiel der vorliegenden Erfindung. Es sind wie in den Figuren 21 und 22 eine Leistungskurve 2100, eine Verbrauchskurve 2102, eine Speicherkurve 2104 und eine Netzkurve 2106 dargestellt. Hier wird Energie in der Batterie gespeichert, wenn die Leistungskurve 2100 die Verbrauchskurve 2102 übersteigt. Die Batterie wird jedoch nur bis zu einem vorbestimmten Füllstand 2300 geladen, um eine Reservekapazität vorzuhalten. Wenn die Batterie nicht weiter geladen wird, wird die überschüssige Leistung der Fotovoltaikanlage ins Netz eingespeist. Nach einer vorbestimmten Wartezeit für die Batterie bis auf Ihre maximale Kapazität geladen, während weiter ins Netz eingespeist wird.

Mit anderen Worten ist ein beispielhafter Verlauf 2104 einer kapazitätsgeführten Betriebsdauer dargestellt. Deutlich ist zu erkennen, dass Kapazität frei gehalten wird, um so genügend Leistung für ein Peakshaving vorzuhalten.

Die hier vorgestellte Betriebsführung trägt dafür Sorge, dass die notwendige Batteriekapazität vorgehalten wird, sodass keine Abregelung notwendig ist. Dies ist in Fig. 23 dargestellt. Diese Art der Betriebsführung würde theoretisch eine perfekte Prognose voraussetzen, auf deren Basis eine Optimierung der Leistungs- und Energieflüsse erfolgen kann. Das hier vorgestellte Verfahren arbeitet ohne Optimierung aller Lastflüsse über den gesamten Tagesverlauf, sondern kombiniert die Betriebsführung mit einer Kapazitätssteuerung, die auf Basis einer adaptiven Prognose arbeitet.

Der Vorteil der hier vorgestellten Betriebsweise liegt darin, dass keine Abregelung erfolgt. Dabei wird keine Prognose über den gesamten Produktionsverlauf und Verbrauchsverlauf benötigt.

In Fig. 23 ist der Verlauf 2104 mit einer solchen Betriebsführung beispielhaft dargestellt. Im Bild ist mit einem Pfeil 2300 markiert, wie die "Sperre" wirkt. Die beiden Größen $t_p$ und $K_P$ wurden mit einer idealen Prognose ermittelt. Diese bisher nicht beschriebene Prognose wird in dem hier vorgestellten Ansatz durch einen adaptiven Ansatz bestimmt. Dabei werden für die Bestimmung der Zielgrößen $t_p^t$ und $\kappa_p^t$ die Last- und Produktionsverläufe $P^t$ und $L^t$ des vergangenen Tages verwendet. Die Zielgrößen für den neuen Tag $t_p^{t+1}$ und $\kappa_p^{t+1}$ werden dann über eine gewichtete Verrechnung mit den Werten des Vortages ermittelt.

$$t_p^{t+1} = \lambda t_p^t + \left(1 - \lambda t_p^{t-1}\right)$$

$$\kappa_p^{t+1} = \lambda \kappa_p^t + \left(1 - \lambda \kappa_p^{t-1}\right)$$

Ohne Maßnahme kann bei einem Beispielhaushalt über einen Zeitraum von einem Jahr ein Ertrag von 1131,79€, bei einer eingespeisten Leistung von 1705,28 kWh, einem Strombezug von 3089,51 kWh und einem Eigenverbrauch von 3562,54 kWh, erzielt werden. Durch eine ideale Prognose kann ein Ertrag von 1226,81€ bei einer eingespeisten Leistung von 1744,51 kWh, einem Strombezug von 3143,94 kWh und einem Eigenverbrauch von 3509,20 kWh erzielt werden. Bei Anwendung des hier vorgestellten Verfahrens der adaptiven Prognose kann ein Ertrag von 1226,22€ bei einer eingespeisten Leistung von 1744,10 kWh, einem Strombezug von 3146,82 kWh und einem Eigenverbrauch von 3507,30 kWh erzielt werden.

Dabei wurde ein Strompreis von

$$c_{gc} = \frac{0.28€}{kWh}$$

und eine Einspeisevergütung von

$$c_{in} = \frac{0.148€}{kWh}$$

EP 3 039 765 B1

verwendet.. Ohne Maßnahme ist der Eigenverbrauch etwas höher und der Strombezug niedriger. Dies liegt daran, dass die Batterie komplett gefüllt ist und somit keine Gefahr einer Unterdeckung besteht. Allerdings führt dies dazu, dass die eingespeiste Leistung niedriger ausfällt. In Summe führt dies zu einem niedrigeren Ertrag, wie bei der idealen Prognose und auch der adaptiven Prognose erkennbar ist. Es zeigt sich, dass das adaptive Verfahren sehr nah an die Performance des idealen Verfahrens kommt.

Die verwendete Batteriekapazität bei groß dimensioniertem PV-Generator ist leicht zu erkennen. Die Ladung der Batterie wird gestoppt bzw. gedrosselt, um die Spitzenleistung in die Batterie zu speichern.

Dieses Verfahren bezieht sich konzeptionell auf die Verwendung in PV Speichersystemen. Die Idee, dass eine Steuerung über den Umweg der Kapazitätsregelung erfolgt, kann allerdings auch in anderen Anwendungen genutzt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (1100) zum Betreiben eines Energiespeichers (104) für eine Fotovoltaikanlage (100), die einer Einspeisebegrenzung (202) zur Energieeinspeisung in ein öffentliches Energienetz (114) unterliegt, wobei das Verfahren (1100) die folgenden Schritte aufweist:

   Einlesen (1102) von zumindest einem Kennwert ($t_1$, $t_2$, $t_{voll}$) der Fotovoltaikanlage (100) und/oder des Energiespeichers (104) zu zumindest einem, einem aktuellen Betriebstag vorausgehenden Betriebstag der Fotovoltaikanlage (100);
   Ermitteln (1104) eines Ladestartzeitpunkts ($t_{start}$) des Energiespeichers (104) für den aktuellen Betriebstag unter Verwendung des Kennwerts ($t_1$, $t_2$, $t_{voll}$) des vorausgehenden Betriebstags und einer Verarbeitungsvorschrift; und
   Bereitstellen (1106) eines Ladesignals für den Energiespeicher (104) zu dem ermittelten Ladestartzeitpunkt ($t_{start}$) des aktuellen Betriebstags, um den Energiespeicher (104) zu betreiben.

2. Verfahren (1100) gemäß Anspruch 1, bei dem im Schritt (1102) des Einlesens als Kennwert ($t_1$, $t_2$, $t_{voll}$) ein Überschreitungszeitpunkt ($t_1$), ein Unterschreitungszeitpunkt ($t_2$) und/oder ein Ladeendzeitpunkt ($t_{voll}$) eingelesen wird, wobei der Überschreitungszeitpunkt ($t_1$) ein erstmaliges Erreichen der Einspeisebegrenzung (202) durch eine in ein Verteilnetz abgegebene Leistung (200) der Fotovoltaikanlage (100) an dem zumindest einen vorausgehenden Betriebstag repräsentiert, wobei der Unterschreitungszeitpunkt ($t_2$) ein letztmaliges Unterschreiten der Einspeisebegrenzung (202) durch die in das Verteilnetz abgegebene Leistung (200) an dem zumindest einen vorausgehenden Betriebstag repräsentiert und/oder der Ladeendzeitpunkt ($t_{voll}$) ein Erreichen einer Speicherkapazität des Energiespeichers (104) an dem zumindest einen vorausgehenden Betriebstag repräsentiert.

3. Verfahren (1100) gemäß Anspruch 2, bei dem im Schritt (1102) des Einlesens der Überschreitungszeitpunkt ($t_1$), der Unterschreitungszeitpunkt ($t_2$) und/oder der Ladeendzeitpunkt ($t_{voll}$) über zumindest zwei Betriebstage gemittelt eingelesen werden.

4. Verfahren (1100) gemäß einem der vorangegangenen Ansprüche, mit einem Schritt des Erfassens von zumindest einem Kennwert ($t_1$, $t_2$, $t_{voll}$) des aktuellen Betriebstags, wobei im Schritt (1102) des Einlesens ferner eine aktuell in das Verteilnetz abgegebene Leistung (200) der Fotovoltaikanlage (100) und/oder ein aktueller Zustand (400) des Energiespeichers (104) eingelesen wird, und im Schritt des Erfassens als Kennwert ($t_1$, $t_2$, $t_{voll}$) des aktuellen Betriebstags ein erstmaliges Erreichen ($t_1$) der Einspeisebegrenzung (202) durch die in das Verteilnetz abgegebene Leistung (200) der Fotovoltaikanlage (100) an dem aktuellen Betriebstag als Überschreitungszeitpunkt ($t_1$) und/oder ein letztmaliges Unterschreiten ($t_2$) der Einspeisebegrenzung (202) durch die abgegebene Leistung (200) an dem aktuellen Betriebstag als Unterschreitungszeitpunkt ($t_2$) und/oder ein Erreichen ($t_{voll}$) der Speicherkapazität des Energiespeichers (104) an dem aktuellen Betriebstag als Ladeendzeitpunkt ($t_{voll}$) erfasst wird.

**5.** Verfahren (1100) gemäß einem der vorangegangenen Ansprüche, bei dem im Schritt (1102) des Einlesens als Kennwert ($t_1$, $t_2$, $t_{voll}$) ferner eine aktuell in das Verteilnetz abgegebene Leistung (200) der Fotovoltaikanlage (100) eingelesen wird, wobei im Schritt (1104) des Ermittelns ein Teilladestartzeitpunkt ermittelt wird, an dem die aktuell abgegebene Leistung (200) die Einspeisebegrenzung (202) erreicht und im Schritt (1106) des Bereitstellens ein Teilladesignal für den Energiespeicher (104) zu dem ermittelten Teilladestartzeitpunkt bereitgestellt wird, um die, die Einspeisebegrenzung (202) übersteigende Leistung (200) der Fotovoltaikanlage (100) in dem Energiespeicher (104) zu speichern.

**6.** Verfahren (1100) gemäß Anspruch 5, bei dem im Schritt (1104) des Ermittelns der Ladestartzeitpunkt ($t_{start}$) so ermittelt wird, dass der erwartete Ladeendzeitpunkt ($t_{voll}$) des aktuellen Betriebstags einen vorbestimmten Zeitversatz zu dem Unterschreitungszeitpunkt ($t_2$) des vorausgehenden Betriebstags aufweist.

**7.** Verfahren (1100) gemäß einem der vorangegangenen Ansprüche, bei dem im Schritt (1102) des Einlesens ferner ein Einspeisezeitpunkt und/oder ein Ladezustand (400) des Energiespeichers (104) eingelesen wird, wobei im Schritt (1106) des Bereitstellens zu dem Einspeisezeitpunkt ein Einspeisesignal für den Energiespeicher (104) bereitgestellt wird, um Energie in das öffentliche Energienetz (114) einzuspeisen, wenn der Energiespeicher (104) noch eine einspeisbare Ladung (400) aufweist.

**8.** Verfahren (1100) gemäß einem der vorangegangenen Ansprüche, bei dem im Schritt (1104) des Ermittelns der Ladestartzeitpunkt ($t_{start}$) so festgelegt wird, dass er vor dem Überschreitungszeitpunkt ($t_1$) liegt.

**9.** Verfahren (1100) gemäß einem der vorangegangenen Ansprüche, mit einem Schritt des Reservierens einer Reservekapazität des Energiespeichers (104) für eine vorbestimmte Zeitdauer, wobei im Schritt (1104) des Ermittelns die Reservekapazität und/oder die Zeitdauer unter Verwendung des zumindest einen Kennwerts ($t_1$, $t_2$, $t_{voll}$) und einer weiteren Verarbeitungsvorschrift ermittelt wird.

**10.** Verfahren gemäß Anspruch 9, bei dem im Schritt (1106) des Bereitstellens die volle Speicherkapazität des Energiespeichers (104) freigegeben wird, wenn die Zeitdauer abgelaufen ist.

**11.** Steuergerät (102) zum Betreiben eines Energiespeichers (104) für eine Fotovoltaikanlage (100), die einer Einspeisebegrenzung (202) zur Energieeinspeisung in ein öffentliches Energienetz (114) unterliegt, wobei das Steuergerät (102) die folgenden Merkmale aufweist:

   eine Einrichtung (1200) zum Einlesen von zumindest einem Kennwert ($t_1$, $t_2$, $t_{voll}$) der Fotovoltaikanlage (100) und/oder des Energiespeichers (104) zu zumindest einem, einem aktuellen Betriebstag vorausgehenden Betriebstag der Fotovoltaikanlage (100);
   eine Einrichtung (1202) zum Ermitteln eines Ladestartzeitpunkts ($t_{start}$) des Energiespeichers (104) für den aktuellen Betriebstag unter Verwendung des Kennwerts ($t_1$, $t_2$, $t_{voll}$) des vorausgehenden Betriebstags und einer Verarbeitungsvorschrift; und
   eine Einrichtung (1204) zum Bereitstellen eines Ladesignals für den Energiespeicher (104) zu dem ermittelten Ladestartzeitpunkt ($t_{start}$) des aktuellen Betriebstags, um den Energiespeicher (104) zu betreiben.

**12.** Computer-Programmprodukt mit Programmcode zur Durchführung des Verfahrens nach einem der Ansprüche 1 bis 10, wenn das Programmprodukt auf einer Vorrichtung ausgeführt wird.

**Claims**

**1.** Method (1100) for operating an energy store (104) for a photovoltaic installation (100), which is subjected to an infeed limitation (202) for feeding energy into a public power grid (114), wherein the method (1100) has the following steps:

   reading in (1102) at least one characteristic value ($t_1$, $t_2$, $t_{full}$) of the photovoltaic installation (100) and/or of the energy store (104) on at least one operating day of the photovoltaic installation (100) preceding a current operating day;
   identifying (1104) a charging start time ($t_{start}$) of the energy store (104) for the current operating day using the characteristic value ($t_1$, $t_2$, $t_{full}$) of the preceding operating day and a processing rule; and
   supplying (1106) a charging signal for the energy store (104) at the identified charging start time ($t_{start}$) of the

current operating day in order to operate the energy store (104).

2. Method (1100) according to Claim 1, wherein, in the reading-in step (1102), the characteristic value ($t_1$, $t_2$, $t_{full}$) read in is an exceeding time ($t_1$), an undershooting time ($t_2$) and/or a charging end time ($t_{full}$), wherein the exceeding time ($t_1$) represents a first instance of reaching the infeed limitation (202) by a power (200) of the photovoltaic installation (100) output into a distribution grid on the at least one preceding operating day, wherein the undershooting time ($t_2$) represents a last instance of undershooting the infeed limitation (202) by the power (200) output into the distribution grid on the at least one preceding operating day and/or the charging end time ($t_{full}$) represents an instance of reaching a storage capacity of the energy store (104) on the at least one preceding operating day.

3. Method (1100) according to Claim 2, wherein, in the reading-in step (1102), the exceeding time (ti), the undershooting time ($t_2$) and/or the charging end time ($t_{full}$) are read in in a manner averaged over at least two operating days.

4. Method (1100) according to one of the preceding claims, having a step of detecting at least one characteristic value ($t_1$, $t_2$, $t_{full}$) of the current operating day, wherein, in the reading-in step (1102), a power (200) of the photovoltaic installation (100) currently output into the distribution grid and/or a current state (400) of the energy store (104) is also read in, and, in the detection step, as the characteristic value ($t_1$, $t_2$, $t_{full}$) of the current operating day, a first instance of reaching ($t_1$) the infeed limitation (202) by the power (200) of the photovoltaic installation (100) output into the distribution grid on the current operating day is detected as the exceeding time ($t_1$) and/or a last instance of undershooting ($t_2$) the infeed limitation (202) by the power (200) output on the current operating day is detected as the undershooting time ($t_2$) and/or an instance of reaching ($t_{full}$) the storage capacity of the energy store (104) on the current operating day is detected as the charging end time ($t_{full}$).

5. Method (1100) according to one of the preceding claims, wherein, in the reading-in step (1102), as the characteristic value ($t_1$, $t_2$, $t_{full}$), a power (200) of the photovoltaic installation (100) currently output into the distribution grid is also read in, wherein, in the identification step (1104), a partial charging start time is identified, at which the currently output power (200) reaches the infeed limitation (202) and, in the supply step (1106), a partial charging signal for the energy store (104) is supplied at the identified partial charging start time in order to store the power (200) of the photovoltaic installation (100) exceeding the infeed limitation (202) in the energy store (104).

6. Method (1100) according to Claim 5, wherein, in the identification step (1104), the charging start time ($t_{start}$) is identified in such a way that the expected charging end time ($t_{full}$) of the current operating day has a predetermined time offset to the undershooting time ($t_2$) of the preceding operating day.

7. Method (1100) according to one of the preceding claims, wherein, in the reading-in step (1102), an infeed time and/or a state of charge (400) of the energy store (104) is also read in, wherein, in the supply step (1106), an infeed signal is supplied for the energy store (104) at the infeed time in order to feed energy into the public power grid (114) when the energy store (104) still has a charge (400) that can be fed in.

8. Method (1100) according to one of the preceding claims, wherein, in the identification step (1104), the charging start time ($t_{start}$) is set in such a way that it is before the exceeding time ($t_1$).

9. Method (1100) according to one of the preceding claims, having a step of reserving a reserve capacity of the energy store (104) for a predetermined time period, wherein, in the identification step (1104), the reserve capacity and/or the time period is identified using the at least one characteristic value ($t_1$, $t_2$, $t_{full}$) and a further processing rule.

10. Method according to Claim 9, wherein, in the supply step (1106), the full storage capacity of the energy store (104) is released when the time period has elapsed.

11. Control device (102) for operating an energy store (104) for a photovoltaic installation (100), which is subjected to an infeed limitation (202) for feeding energy into a public power grid (114), wherein the control device (102) has the following features:

a device (1200) for reading in at least one characteristic value ($t_1$, $t_2$, $t_{full}$) of the photovoltaic installation (100) and/or of the energy store (104) on at least one operating day of the photovoltaic installation (100) preceding a current operating day;
a device (1202) for identifying a charging start time ($t_{start}$) of the energy store (104) for the current operating day using the characteristic value ($t_1$, $t_2$, $t_{full}$) of the preceding operating day and a processing rule; and

a device (1204) for supplying a charging signal for the energy store (104) at the identified charging start time ($t_{start}$) of the current operating day in order to operate the energy store (104).

12. Computer program product having program code for carrying out the method according to one of Claims 1 to 10 when the program product is executed on an apparatus.


**Revendications**

1. Procédé (1100) permettant de faire fonctionner un accumulateur d'énergie (104) destiné à une installation photovoltaïque (100) qui est soumise à une limitation d'injection (202) pour l'injection d'énergie dans un réseau d'énergie public (114), dans lequel le procédé (1100) comprend les étapes suivantes :

la lecture (1102) d'au moins une valeur caractéristique ($t_1$, $t_2$, $t_{voll}$) de l'installation photovoltaïque (100) et/ou de l'accumulateur d'énergie (104) pour au moins un jour de fonctionnement de l'installation photovoltaïque (100) précédant un jour de fonctionnement actuel ;
la détermination (1104) d'un temps de début de charge ($t_{start}$) de l'accumulateur d'énergie (104) pour le jour de fonctionnement actuel en utilisant la valeur caractéristique ($t_1$, $t_2$, $t_{voll}$) du jour de fonctionnement précédent et une instruction de traitement ; et
la fourniture (1106) d'un signal de charge destiné à l'accumulateur d'énergie (104) au temps de charge ($t_{start}$) déterminé du jour de fonctionnement actuel afin de faire fonctionner l'accumulateur d'énergie (104).

2. Procédé (1100) selon la revendication 1, dans lequel, à l'étape (1102) de lecture, un temps de franchissement en sens croissant (ti), un temps de franchissement en sens décroissant ($t_2$) et/ou un temps de fin de charge ($t_{voll}$) est/sont lu (s) en tant que valeur caractéristique ($t_1$, $t_2$, $t_{voll}$), dans lequel le temps de franchissement en sens croissant ($t_1$) représente la première fois qu'une puissance (200) de l'installation photovoltaïque (100) délivrée dans un réseau de distribution atteint la limitation d'injection (202) pour ledit au moins un jour de fonctionnement précédent, dans lequel le temps de franchissement en sens décroissant ($t_2$) représente la dernière fois que la puissance (200) de l'installation photovoltaïque (100) délivrée dans le réseau de distribution s'abaisse en-dessous de la limitation d'injection (202) pour ledit au moins un jour de fonctionnement précédent et/ou le temps de fin de charge ($t_{voll}$) représente le moment où une capacité d'accumulation de l'accumulateur d'énergie (104) est atteinte pour ledit au moins un jour de fonctionnement précédent.

3. Procédé (1100) selon la revendication 2, dans lequel, à l'étape (1102) de lecture, le temps de franchissement en sens croissant (ti), le temps de franchissement en sens décroissant ($t_2$) et/ou le temps de fin de charge ($t_{voll}$) sont lus de manière moyennée sur au moins deux jours de fonctionnement.

4. Procédé (1100) selon l'une des revendications précédentes, comprenant une étape de détection d'au moins une valeur caractéristique ($t_1$, $t_2$, $t_{voll}$) du jour de fonctionnement actuel, dans lequel, à l'étape (1102) de lecture, une puissance (200) de l'installation photovoltaïque (100) actuellement délivrée dans le réseau de distribution et/ou un état actuel (400) de l'accumulateur d'énergie (104) est/sont en outre lu(s) et, à l'étape de détection en tant que valeur caractéristique ($t_1$, $t_2$, $t_{voll}$) du jour de fonctionnement actuel, la première fois ($t_1$) que la puissance (200) de l'installation photovoltaïque (100) délivrée dans le réseau de distribution atteint la limitation d'injection (202) pour le jour de fonctionnement actuel est détectée en tant que temps de franchissement en sens croissant ($t_1$) et/ou la dernière fois ($t_2$) que le puissance (200) délivrée pour le jour de fonctionnement actuel s'abaisse en-dessous de la limitation d'injection (202) est détectée en tant que temps de franchissement en sens décroissant ($t_2$) et/ou le moment où la capacité d'accumulation de l'accumulateur d'énergie (104) est atteinte ($t_{voll}$) pour le jour de fonctionnement actuel est détecté en tant que temps de fin de charge ($t_{voll}$).

5. Procédé (1100) selon l'une des revendications précédentes, dans lequel, à l'étape (1102) de lecture en tant que valeur caractéristique ($t_1$, $t_2$, $t_{voll}$), une puissance (200) de l'installation photovoltaïque (100) actuellement délivrée dans le réseau de distribution est en outre lue, dans lequel, à l'étape (1104) de détermination, un temps de début de charge partielle est déterminé pour lequel la puissance actuellement délivrée (200) atteint la limitation d'injection (202) et, à l'étape (1106) de fourniture, un signal de charge partielle destiné à l'accumulateur d'énergie (104) est fourni au temps de début de charge partielle déterminé, afin d'accumuler dans l'accumulateur d'énergie (104) la puissance (200) du système photovoltaïque (100) dépassant la limitation d'injection (202).

6. Procédé (1100) selon la revendication 5, dans lequel, à l'étape (1104) de détermination, le temps de début de charge

($t_{start}$) est déterminé de telle manière que le temps de fin de charge attendu ($t_{voll}$) du jour de fonctionnement actuel présente un décalage temporel prédéterminé par rapport au temps de franchissement en sens décroissant ($t_2$) du jour de fonctionnement précédent.

7. Procédé (1100) selon l'une des revendications précédentes, dans lequel, à l'étape (1102) de lecture, un temps d'injection et/ou un état de charge (400) de l'accumulateur d'énergie (104) est également lu, dans lequel, à l'étape (1106) de fourniture au temps d'injection, un signal d'injection destiné à l'accumulateur d'énergie (104) est fourni afin d'injecter de l'énergie dans le réseau d'énergie public (114) lorsque l'accumulateur d'énergie (104) présente encore une charge (400) qui peut être injectée dans le réseau d'énergie public.

8. Procédé (1100) selon l'une des revendications précédentes, dans lequel, à l'étape (1104) de détermination, le temps de début de charge ($t_{start}$) est déterminé de manière à ce qu'il soit antérieur au temps de franchissement en sens croissant ($t_1$).

9. Procédé (1100) selon l'une des revendications précédentes, comprenant une étape consistant à réserver une capacité de réserve de l'accumulateur d'énergie (104) pendant une période de temps prédéterminée, dans lequel, à l'étape (1104) de détermination, la capacité de réserve et/ou la période de temps est déterminée en utilisant au moins une valeur caractéristique ($t_1$, $t_2$, $t_{voll}$) et une instruction de traitement supplémentaire.

10. Procédé selon la revendication 9, dans lequel, à l'étape (1106) de fourniture, la pleine capacité d'accumulation de l'accumulateur d'énergie (104) est déchargée à l'expiration de la période de temps.

11. Appareil de commande (102) pour le fonctionnement d'un accumulateur d'énergie (104) destiné à une installation photovoltaïque (100) qui est soumise à une limitation d'injection (202) pour l'alimentation en énergie d'un réseau d'énergie public (114), dans lequel l'appareil de commande (102) présente les caractéristiques suivantes :

   un dispositif (1200) destiné à lire au moins une valeur caractéristique ($t_1$, $t_2$, $t_{voll}$) de l'installation photovoltaïque (100) et/ou de l'accumulateur d'énergie (104) pour au moins un jour de fonctionnement de l'installation photovoltaïque (100) précédant un jour de fonctionnement actuel ;
   un dispositif (1202) destiné à déterminer un temps de début de charge ($t_{start}$) de l'accumulateur d'énergie (104) pour le jour de fonctionnement actuel en utilisant la valeur caractéristique ($t_1$, $t_2$, $t_{voll}$) du jour de fonctionnement précédent et une instruction de traitement ; et
   un dispositif (1204) destiné à fournir un signal de charge pour l'accumulateur d'énergie (104) au temps de début de charge ($t_{start}$) déterminé du jour de fonctionnement actuel afin de faire fonctionner l'accumulateur d'énergie (104).

12. Produit de programme d'ordinateur comportant un code de programme destiné à mettre en oeuvre le procédé selon l'une des revendications 1 à 10 lorsque le produit de programme est exécuté sur un dispositif.

# Fig. 1

# Fig. 2

# Fig. 3

# Fig. 4

## Fig. 5

## Fig. 6

## Fig. 7

## Fig. 8

Fig. 9

Fig. 10

# Fig. 11

# Fig. 12

# Fig. 13

# Fig. 14

**Fig. 15**

**Fig. 16**

# Fig. 17

# Fig. 18

## Fig. 19

## Fig. 20

## Fig. 21

## Fig. 22

# Fig. 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2293410 A2
- US 2011276269 A1